# EUROPEAN PATENT APPLICATION

(11) **EP 4 844 946 A1**
(43) Date of publication of application: **25.11.2026**
(21) Application number: 25762296.9
(22) Date of filing: 16.01.2025
(51) Int. Cl.: H01Q 1/24, H01Q 5/307, H04M 1/02

(54) **ANTENNA AND ELECTRONIC DEVICE INCLUDING SAME**

(30) Priority: 26.02.2024 KR 20240027481; 20.03.2024 KR 20240038501
(71) Applicant: Samsung Electronics Co., Ltd., Suwon-si, Gyeonggi-do 16677 (KR)
(72) Inventor: HWANG, Soonho, Suwon-si, Gyeonggi-do 16677 (KR); KANG, Hyeonuk, Suwon-si, Gyeonggi-do 16677 (KR); LEE, Kyungjae, Suwon-si, Gyeonggi-do 16677 (KR); NAM, Hojung, Suwon-si, Gyeonggi-do 16677 (KR); PARK, Sungkoo, Suwon-si, Gyeonggi-do 16677 (KR); LEE, Kookjoo, Suwon-si, Gyeonggi-do 16677 (KR); KIM, Seunghwan, Suwon-si, Gyeonggi-do 16677 (KR); CHUN, Jaebong, Suwon-si, Gyeonggi-do 16677 (KR)
(74) Representative: HGF
(86) International application number: PCT/KR2025/000937
(87) International publication number: WO 2025/183362

(57) **Abstract**

According to various embodiments, an electronic device may comprise: a housing including a first conductive portion; a cover coupled to the housing; a display disposed in the housing to be at least partially visible from the outside through the cover; at least one conductive pattern which is disposed in the cover to be invisible from the outside of the electronic device and at least one point of which is electrically connected to the first conductive portion; and a wireless communication circuit configured to transmit or receive a wireless signal through the first conductive portion and the at least one conductive pattern.

## Description

### [Technical Field]

Embodiments of the disclosure relate to an antenna and an electronic device including the same.

### [Background Art]

As functional differences among electronic devices from different manufacturers continue to narrow, electronic devices are becoming increasingly slimmer to satisfy consumer demand and are being developed to increase rigidity, enhance design, and differentiate their functional features. As part of this trend, an electronic device may include at least one antenna among its components for communication. Such an antenna may be implemented through a metal bezel (e.g., a lateral member) used as part of a housing of the electronic device and is being further developed to improve radiation performance.

The above information may be provided as related art for the purpose of facilitating an understanding of the disclosure. No claim or determination is made as to whether any of the above description may be applicable as prior art with respect to the disclosure.

### [Disclosure of Invention]

### [Technical Problem]

An electronic device (e.g., a portable communication device or a mobile terminal) may include at least one housing (e.g., a housing structure) defining a space for accommodating electronic components. The housing may include a lateral member used as at least part of a side surface of the electronic device. The lateral member may be formed of a metal (e.g., a conductive member, a conductive portion, or a conductive material) and a polymer (e.g., a non-conductive member, a non-conductive portion, or a non-conductive material) coupled to the metal to reinforce the rigidity of the electronic device and/or perform a specific function (e.g., an antenna function). For example, the lateral member may include at least one conductive portion separated by at least one non-conductive portion (e.g., a segment, a gap, or a slit). The at least one conductive portion may operate as at least one antenna (e.g., a bezel antenna or a metal frame antenna) operating in at least one frequency band when electrically connected to a wireless communication circuit of the electronic device. For example, the at least one antenna may include at least one of a legacy antenna operating in a frequency band of about 600 MHz to about 6000 MHz, a 5G antenna operating in a frequency band of about 3 GHz to about 300 GHz, an ultra-wideband (UWB) antenna operating in a frequency band of about 6 GHz to about 8.5 GHz, or a near field communication (NFC) antenna operating in a frequency band of about 13.56 MHz for communication over an ultra-short distance.

An electronic device may be classified in various ways depending on the shape of the housing (e.g., a housing structure). For example, the electronic device may include a bar-type electronic device including a single housing, a foldable electronic device having a foldable housing structure in which a first housing and a second housing are rotatably connected to each other through a hinge module, a multi-foldable electronic device having a multi-foldable housing structure in which three or more housings are rotatably connected to each other through hinge modules, or a rollable electronic device having a sliding housing structure in which a first housing and a second housing are slidably coupled to each other.

Electronic devices having various structures are becoming increasingly slimmer, and due to the arrangement of operating structures such as hinge modules, the effective volume of an antenna implemented through at least a portion of a side surface of the electronic device is gradually reduced. As a result, it becomes difficult to secure an electrical length corresponding to an operating frequency band, thereby degrading the radiation performance of the antenna.

Various embodiments of the disclosure may provide an antenna and an electronic device including the same, which may help improve radiation performance by increasing an effective volume.

According to various embodiments, there may be provided an antenna and an electronic device including the same, which may help secure a sufficient electrical length corresponding to an operating frequency band.

However, the problems intended to be solved by the disclosure are not limited to those described above, and various other problems may also be addressed without departing from the spirit and scope of the disclosure.

### [Solution to Problem]

According to various embodiments, an electronic device may include a housing including a first conductive portion, a cover coupled to the housing, a display disposed within the housing and visible at least partially from the outside through the cover, at least one conductive pattern disposed in the cover so as not to be visible from the outside of the electronic device and having at least one portion electrically connected to the first conductive portion, and a wireless communication circuit configured to transmit or receive a wireless signal through the first conductive portion and the at least one conductive pattern.

### [Advantageous Effects of Invention]

According to exemplary embodiments of the disclosure, an electronic device includes an antenna in which both a conductive portion disposed as part of a side surface of the electronic device and at least one conductive pattern disposed on an inner surface of a cover (e.g., a protective cover or a window layer) near the conductive portion serve as radiating elements, thereby helping to improve the radiation performance of the antenna by securing the effective volume and electrical length of the antenna, both of which may be reduced due to various operating structures and the slimming of the electronic device.

Further, various effects directly or indirectly identified through this document can be provided.

Effects that can be obtained from the disclosure are not limited to the above-described effects, and other effects not described will be clearly understood by those of ordinary skill in the art to which the disclosure belongs from the description below.

### [Brief Description of Drawings]

In relation to the description of the drawings, the same or similar reference numerals may be used for identical or similar components.
FIG. 1 is a block diagram illustrating an electronic device in a network environment according to various embodiments of the disclosure.
FIG. 2A is a perspective view illustrating an electronic device in a flat state or an unfolded state according to various embodiments of the disclosure.
FIG. 2B is a diagram illustrating a front surface of an electronic device in an unfolded state according to various embodiments of the disclosure.
FIG. 2C is a diagram illustrating a rear surface of an electronic device in an unfolded state according to various embodiments of the disclosure.
FIG. 3A is a perspective view illustrating an electronic device in a folded state according to various embodiments of the disclosure.
FIG. 3B is a perspective view illustrating an electronic device in an intermediate state according to various embodiments of the disclosure.
FIG. 4A is an exploded perspective view illustrating an electronic device according to various embodiments of the disclosure.
FIG. 4B is a perspective view illustrating a first protective cover according to various embodiments of the disclosure.
FIG. 5A is a diagram illustrating a portion of an electronic device including a conductive pattern according to various embodiments of the disclosure.
FIG. 5B is a cross-sectional perspective view of an electronic device taken along line 5b-5b of FIG. 5A according to various embodiments of the disclosure.
FIG. 5C is a cross-sectional view of an electronic device taken along line 5b-5b of FIG. 5A according to various embodiments of the disclosure.
FIG. 6 is a graph comparing radiation performance of an antenna of FIG. 5A depending on the presence or absence of a conductive pattern according to various embodiments of the disclosure.
FIG. 7 is a diagram illustrating a constitution of an electronic device including a conductive pattern according to various embodiments of the disclosure.
FIG. 8 is a graph comparing radiation performance of an antenna of FIG. 7 depending on the presence or absence of a conductive pattern according to various embodiments of the disclosure.
FIGS. 9A to 9G are diagrams illustrating various arrangement structures of conductive patterns in an electronic device according to various embodiments of the disclosure.
FIG. 10 is a partial cross-sectional view illustrating an electronic device including a conductive layer according to various embodiments of the disclosure.
FIG. 11A is a front perspective view illustrating a multi-foldable electronic device in an unfolded state according to various embodiments of the disclosure.
FIG. 11B is a rear perspective view illustrating a multi-foldable electronic device in an unfolded state according to various embodiments of the disclosure.
FIG. 11C is a diagram illustrating one surface of a multi-foldable electronic device in a folded state according to various embodiments of the disclosure.
FIG. 12A is a plan view illustrating an electronic device in an extended state according to various embodiments of the disclosure.
FIG. 12B is a cross-sectional view of an electronic device taken along line 12b-12b of FIG. 12A according to various embodiments of the disclosure.
FIG. 13A is a front perspective view illustrating an electronic device according to various embodiments of the disclosure.
FIG. 13B is a rear perspective view illustrating an electronic device according to various embodiments of the disclosure.

### [Mode for the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

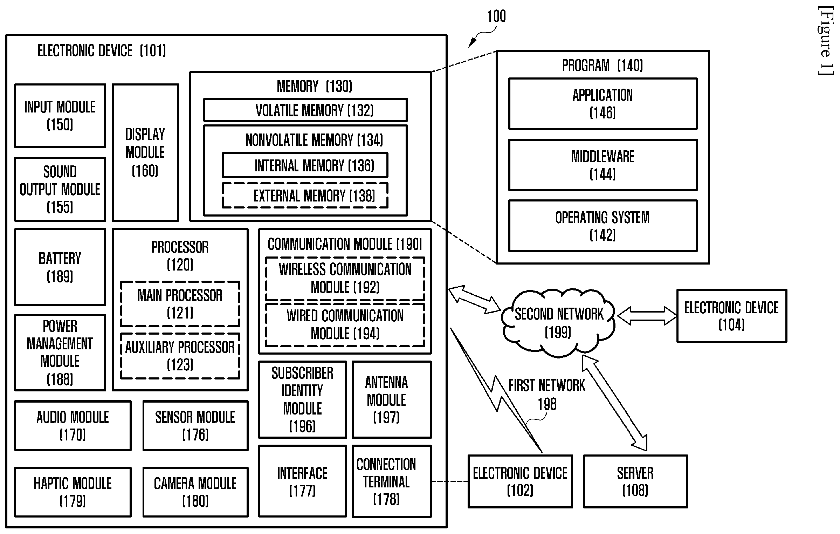

FIG. 1 is a block diagram illustrating an example electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 ora headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

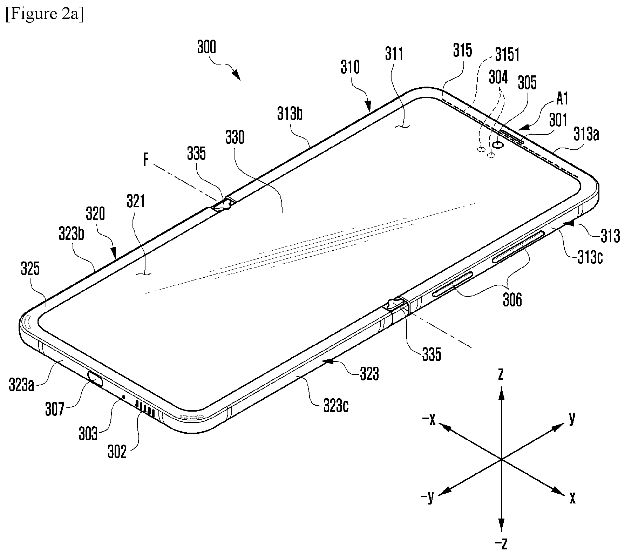

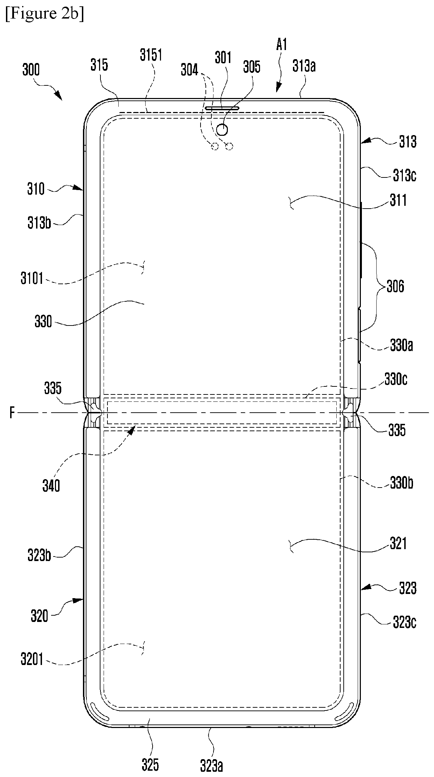

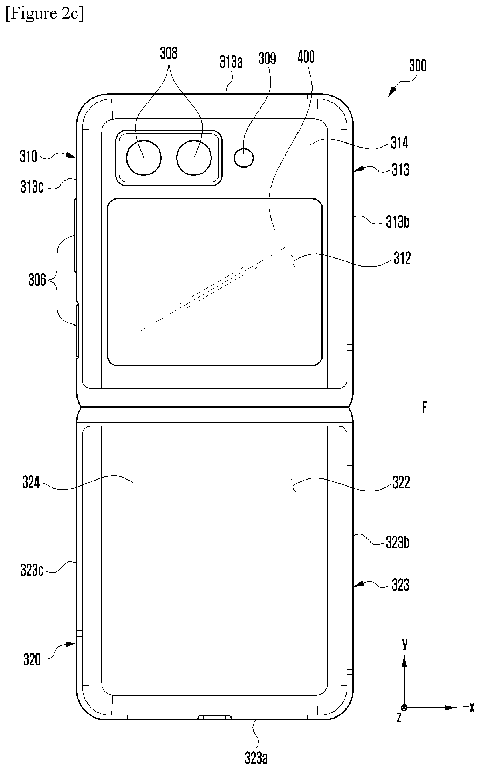

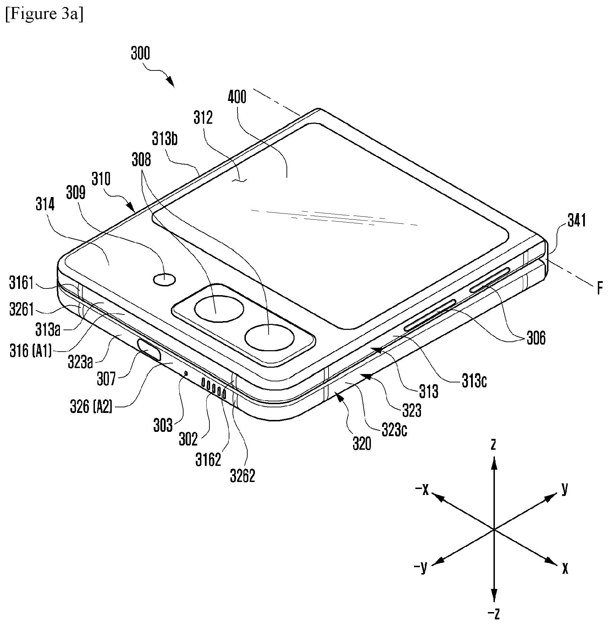

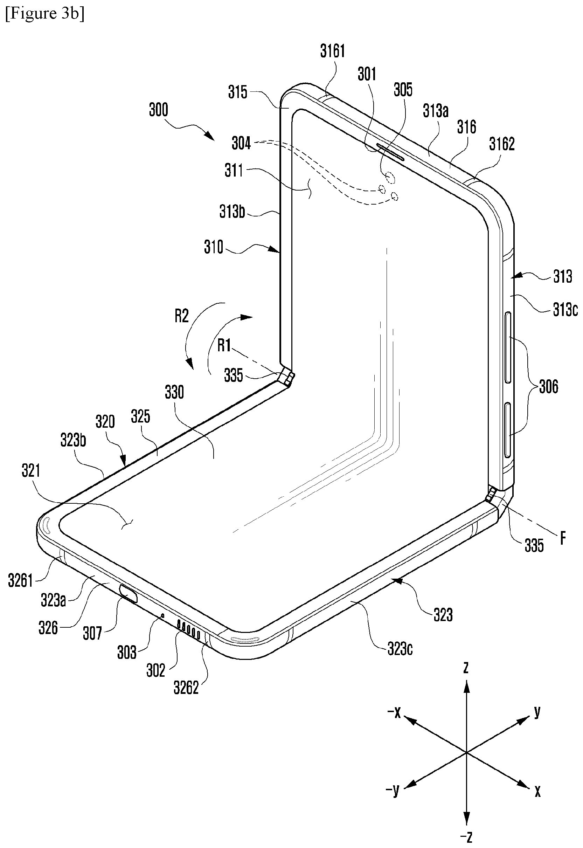

FIG. 2A is a perspective view illustrating an electronic device 300 in a flat state (or an unfolding state) according to various embodiments of the disclosure. FIG. 2B is a diagram illustrating a front surface of the electronic device 300 in an unfolded state according to various embodiments of the disclosure. FIG. 2C is a diagram illustrating a rear surface of the electronic device 300 in an unfolded state according to various embodiments of the disclosure. FIG. 3A is a perspective view illustrating an electronic device 300 in a folding state according to various embodiments of the disclosure. FIG. 3B is a perspective view illustrating an electronic device 300 in an intermediate state according to various embodiments of the disclosure.

The electronic device 300 of FIGS. 2A to 3B may be at least partially similar to the electronic device 101 of FIG. 1, or may further include components according to other embodiments of the electronic device.

With reference to FIGS. 2A to 3B, the electronic device 300 (e.g., a portable communication device) may include a pair of housings 310 and 320 (e.g., foldable housings) rotatably coupled to each other about a hinge module 340 (e.g., a hinge device or a hinge structure) so as to be foldable. In some embodiments, the hinge module 340 may be arranged in the x-axis direction or the y-axis direction. In some embodiments, two or more hinge modules 340 may be arranged such that folding occurs in the same direction or in different directions. In an embodiment, the electronic device 300 may include a first display 330 (e.g., a flexible display) disposed in an area defined by the pair of housings 310 and 320. In an embodiment, the first housing 310 and the second housing 320 may be disposed on opposite sides of a folding axis F and have shapes substantially symmetric with respect to the folding axis F. In an embodiment, the angle between, or the distance between, the first housing 310 and the second housing 320 may vary depending on whether the electronic device 300 is in a flat state (or an unfolding state), a folding state, or an intermediate state.

According to various embodiments, a pair of housings 310 and 320 may include a first housing 310 (e.g., a first housing structure) coupled to a hinge module 340 and a second housing 320 (e.g., a second housing structure) coupled to a hinge module 340. In an embodiment, the first housing 310 may include, in an unfolded state, a first surface 311 (e.g., a front surface) facing a front direction (e.g., the z-axis direction) and a second surface 312 (e.g., a rear surface) facing a rear direction (e.g., the -z-axis direction) opposite the first surface 311. In an embodiment, the second housing 320 may include, in an unfolded state, a third surface 321 (e.g., a front surface) facing the front direction (e.g., the z-axis direction) and a fourth surface 322 (e.g., a rear surface) facing the rear direction (e.g., the -z-axis direction). In an embodiment, the electronic device 300 may be configured such that, in the unfolded state, the first surface 311 of the first housing 310 and the third surface 321 of the second housing 320 face substantially the same first direction (e.g., the z-axis direction), and, in the folded state, the first surface 311 and the third surface 321 face each other. In an embodiment, the electronic device 300 may be configured such that, in the unfolded state, the second surface 312 of the first housing 310 and the fourth surface 322 of the second housing 320 face substantially the same second direction (e.g., the -z-axis direction), and, in the folded state, the second surface 312 and the fourth surface 322 face opposite directions. For example, in the folded state, the second surface 312 may face the first direction (e.g., the z-axis direction), and the fourth surface 322 may face the second direction (e.g., the - z-axis direction).

According to various embodiments, the first housing 310 may include a first lateral member 313 that at least partially forms the exterior of the electronic device 300, and a first rear cover 314 coupled to the first lateral member 313 and forming at least a portion of the second surface 312 of the electronic device 300. In an embodiment, the first lateral member 313 may include a first side surface 313a, a second side surface 313b extending from one end of the first side surface 313a, and a third side surface 313c extending from the other end of the first side surface 313a. In an embodiment, the first lateral member 313 may have a rectangular shape (e.g., square) defined by the first side surface 313a, the second side surface 313b, and the third side surface 313c.

According to various embodiments, the second housing 320 may include a second lateral member 323 that at least partially forms the exterior of the electronic device 300, and a second rear cover 324 coupled to the second lateral member 323 and forming at least a portion of the fourth surface 322 of the electronic device 300. In an embodiment, the second lateral member 323 may include a fourth side surface 323a, a fifth side surface 323b extending from one end of the fourth side surface 323a, and a sixth side surface 323c extending from the other end of the fourth side surface 323a. In an embodiment, the second lateral member 323 may have a rectangular shape defined by the fourth side surface 323a, the fifth side surface 323b, and the sixth side surface 323c. In an embodiment, the first housing 310 and the second housing 320 may constitute a foldable housing (e.g., a foldable housing structure or a housing structure).

According to various embodiments, the pair of housings 310 and 320 may not be limited to the illustrated configuration and arrangement and may be implemented through other shapes or combinations and/or couplings of components. For example, in some embodiments, the first lateral member 313 may be formed integrally with the first rear cover 314, and the second lateral member 323 may be formed integrally with the second rear cover 324.

According to various embodiments, in the unfolded state, the second side surface 313b of the first lateral member 313 may be connected to the fifth side surface 323b of the second lateral member 323. In an embodiment, in the unfolded state, the third side surface 313c of the first lateral member 313 may be connected to the sixth side surface 323c of the second lateral member 323. In an embodiment, in the unfolded state, the electronic device 300 may be configured such that a combined length of the second side surface 313b and the fifth side surface 323b exceeds a length of the first side surface 313a and/or the fourth side surface 323a. Further, the electronic device 300 may be configured such that a combined length of the third side surface 313c and the sixth side surface 323c exceeds a length of the first side surface 313a and/or the fourth side surface 323a.

According to various embodiments, the first lateral member 313 and/or the second lateral member 323 may be formed of metal (e.g., a conductive member or a conductive region), or may further include a polymer (e.g., a non-conductive member or a non-conductive region) injection-molded with the metal. In an embodiment, the first lateral member 313 and/or the second lateral member 323 may include at least one conductive portion 316 and/or 326 electrically segmented by at least one of non-conductive portions 3161, 3162, and/or 3261, 3262 (e.g., a segment, a gap, or a slit) formed of a polymer. For example, the conductive portion 616 disposed on the first lateral member 313 and spaced by spaced-apart non-conductive portions 3162 and 6162 may operate as an antenna A1 by being electrically connected to a wireless communication circuit (e.g., the wireless communication module 192 of FIG. 1) (e.g., a cellular communication module) disposed inside the electronic device 300. In an embodiment, another conductive portion 326 disposed on the second lateral member 323 and spaced by spaced-apart another non-conductive portions 3261 and 3262 may operate as another antenna A2 by being electrically connected to a wireless communication circuit (e.g., the wireless communication module 192 of FIG. 1) (e.g., a cellular communication module) disposed inside the electronic device 300. For example, the antenna A1 and another antenna A2 may operate in at least one specified frequency band (e.g., about 400 MHz to about 6000 MHz) (e.g., a legacy band).

According to various embodiments, the first rear cover 314 and/or the second rear cover 324 may be formed of at least one of, or a combination of two or more of, coated or colored glass, ceramic, polymer, or metal (e.g., aluminum, stainless steel (STS), or magnesium).

According to various embodiments, the first display 330 may be disposed to extend from the first surface 311 of the first housing 310 across the hinge module 340 (e.g., a hinge structure or a hinge assembly) onto at least a portion of the third surface 321 of the second housing 320. For example, the first display 330 may include a first portion 330a substantially corresponding to the first surface 311, a second portion 330b corresponding to the third surface 321, and a third portion 330c (e.g., a bendable portion) connecting the first portion 330a and the second portion 330b and corresponding to the hinge module 340.

According to various embodiments, the electronic device 300 may include a first protective cover 315 (e.g., a first cover, a first protective frame, a first protective member, or a first decoration member) coupled along the edge of the first housing 310. In an embodiment, the electronic device 300 may include a second protective cover 325 (e.g., a second cover, a second protective frame, a second protective member, or a second decoration member) coupled along the edge of the second housing 320. In an embodiment, the first protective cover 315 and/or the second protective cover 325 may be formed of a metal or polymer material. In an embodiment, the first protective cover 315 and/or the second protective cover 325 may be used as a decoration member. In an embodiment, the first display 330 may be positioned such that an edge of the first portion 330a is interposed between the first housing 310 and the first protective cover 315. In an embodiment, the first display 330 may be positioned such that an edge of the second portion 330b is interposed between the second housing 320 and the second protective cover 325. In an embodiment, the first display 330 may be positioned such that an edge of the first display 330 is protected by a protective cap 335 disposed in an area corresponding to the hinge module 340. Thus, the edge of the first display 330 may be substantially protected from the outside. In an embodiment, the electronic device 300 may include a hinge housing 341 (e.g., a hinge cover) configured to support the hinge module 340, the hinge housing 341 being exposed to the outside when the electronic device 300 is in a folded state, and being retracted into a first space 3101 of the first housing 310 and a second space 3201 of the second housing 320 so as not to be visible from the outside when the electronic device 300 is in an unfolded state. In some embodiments, the first display 330 may be disposed to extend from at least a portion of the second surface 312 to at least a portion of the fourth surface 322. In this case, the electronic device 300 may be folded so that the first display 330 may be exposed to the outside (out-folding method).

According to various embodiments, the electronic device 300 may include a second display 400 (e.g., a sub-display) disposed separately from the first display 330. In an embodiment, the second display 400 may be disposed so as to be at least partially exposed on the second surface 312 of the first housing 310 so that, when the electronic device 300 is in the folded state, the second display 400 may display status information of the electronic device 300 instead of the display function of the first display 330. In an embodiment, the second display 400 may be disposed to be visible from the outside through at least a portion of the first rear cover 314. In some embodiments, the second display 400 may be disposed on the fourth surface 322 of the second housing 320. In this case, the second display 400 may be disposed to be visible from the outside through at least a portion of the second rear cover 324.

According to various embodiments, the electronic device 300 may include at least one of an input device 303 (e.g., a microphone), audio output devices 301 and 302, a sensor module 304, camera devices 305 and 308, a key input device 306, or a connector port 307. In the illustrated embodiment, the input device 303 (e.g., a microphone), the audio output devices 301 and 302, the sensor module 304, the camera devices 305 and 308, the key input device 306, or the connector port 307 may refer to a hole or shape formed in the first housing 310 or the second housing 320, but may also include an actual electronic component (e.g., an input device, an audio output device, a sensor module, or a camera device) disposed inside the electronic device 300 and operating through the hole or shape.

According to various embodiments, the input device 303 may include at least one microphone 303 disposed in the second housing 320. In some embodiments, the input device 303 may include a plurality of microphones 303 disposed to detect the direction of sound. In some embodiments, the plurality of microphones 303 may be disposed at appropriate locations in the first housing 310 and/or the second housing 320. In an embodiment, the audio output devices 301 and 302 may include speakers 301 and 302. In an embodiment, the speakers 301 and 302 may include a call receiver 301 disposed in the first housing 310 and a speaker 302 disposed in the second housing 320. In some embodiments, the input device 303, the audio output devices 301 and 302, and the connector port 307 may be disposed in a space provided in the first housing 310 and/or the second housing 320 of the electronic device 300 and be exposed to the external environment through at least one hole formed in the first housing 310 and/or the second housing 320. In an embodiment, at least one connector port 307 may be used to transmit and receive power and/or data to and from an external electronic device. In some embodiments, at least one connector port (e.g., an ear jack hole) may accommodate a connector (e.g., an ear jack) for transmitting and receiving audio signals to and from an external electronic device. In some embodiments, the hole formed in the first housing 310 and/or the second housing 320 may be shared by the input device 303 and the audio output devices 301 and 302. In some embodiments, the audio output devices 301 and 302 may include a speaker (e.g., a piezo speaker) configured to operate without requiring a hole formed in the first housing 310 and/or the second housing 320.

According to various embodiments, the sensor module 304 may generate an electrical signal or a data value corresponding to an internal operating state of the electronic device 300 or an external environmental condition. For example, the sensor module 304 may detect the external environment through the first surface 311 of the first housing 310. In some embodiments, the electronic device 300 may further include at least one sensor module disposed to detect the external environment through the second surface 312 of the first housing 310. In an embodiment, the sensor module 304 (e.g., an illuminance sensor) may be disposed below the first display 330 to detect the external environment through the first display 330. In an embodiment, the sensor module 304 may include at least one of a gesture sensor, a gyroscope sensor, a barometric pressure sensor, a magnetic sensor, an accelerometer, a grip sensor, a color sensor, an infrared (IR) sensor, a biosensor, a temperature sensor, a humidity sensor, an illuminance sensor, a proximity sensor, or an ultrasonic sensor.

According to various embodiments, the camera devices 305 and 308 may include a first camera device 305 (e.g., a front camera device) disposed on the first surface 311 of the first housing 310 and a second camera device 308 disposed on the second surface 312 of the first housing 310. The electronic device 300 may further include a flash 309 disposed near the second camera device 308. In an embodiment, the camera devices 305 and 308 may include one or more lenses, image sensors, and/or an image signal processor. The flash 309 may include, for example, a light-emitting diode or a xenon lamp. In an embodiment, the camera devices 305 and 308 may be arranged such that two or more lenses (e.g., a wide-angle lens, an ultra-wide-angle lens, or a telephoto lens) and image sensors are disposed on one surface (e.g., the first surface 311, the second surface 312, the third surface 321, or the fourth surface 322) of the electronic device 300. In some embodiments, the camera devices 305 and 308 may include lenses and/or image sensors for time of flight (TOF).

According to various embodiments, the key input device 306 (e.g., a key button) may be disposed on the third side surface 313c of the first lateral member 313 of the first housing 310. In some embodiments, the key input device 306 may be disposed on at least one of the other side surfaces 313a and 313b of the first housing 310 and/or the side surfaces 323a, 323b, and 323c of the second housing 320. In some embodiments, the electronic device 300 may not include some or all of the key input devices 306, and any omitted key input device 306 may be implemented in another form, such as a soft key, on the first display 330. In some embodiments, the key input device 306 may be implemented using a pressure sensor included in the first display 330.

According to various embodiments, some camera devices (e.g., the first camera device 305) of the camera devices 305 and 308 or the sensor module 304 may be disposed to be exposed through the first display 330. For example, the first camera device 305 or the sensor module 304 may be disposed in the internal space of the electronic device 300 so as to face the external environment through an opening (e.g., a through hole) at least partially formed in the first display 330. In another embodiment, some sensor modules 304 may be disposed in the internal space of the electronic device 300 to perform their functions without being visually exposed through the first display 330. For example, in this case, an opening may be omitted from an area of the first display 330 facing the sensor module 304.

With reference to FIG. 3B, the electronic device 300 may be configured to maintain an intermediate state through the hinge module 340. In an embodiment, when the electronic device 300 is in the intermediate state, the electronic device 300 may control the first display 330 such that different content is displayed in a display area corresponding to the first surface 311 and a display area corresponding to the third surface 321. In an embodiment, the electronic device 300 may operate in a substantially unfolded state (e.g., the unfolded state of FIG. 2A) and/or a substantially folded state (e.g., the folded state of FIG. 3A) based on a predetermined angle (e.g., an angle between the first housing 310 and the second housing 320 when the electronic device 300 is in the intermediate state) through the hinge module 340. For example, the electronic device 300 may transition to the unfolded state (e.g., the unfolded state of FIG. 2A) when pressure is applied in the unfolding direction (direction R1) while the electronic device 300 is in an intermediate state unfolded to the predetermined angle through the hinge module 340. For example, the electronic device 300 may transition to the folded state (e.g., the folded state of FIG. 3A) when pressure is applied in the folding direction (direction R2) while the electronic device 300 is in an intermediate state unfolded to the predetermined angle through the hinge module 340. In an embodiment, the electronic device 300 may be configured to maintain an unfolded state (not illustrated) at various angles through the hinge module 340.

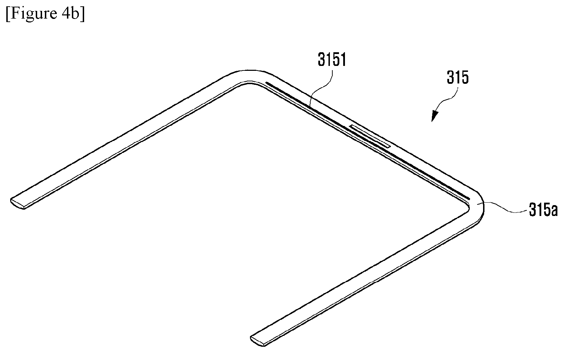

According to various embodiments, the electronic device 300 may include at least one conductive pattern 3151 (e.g., a conductive layer or a conductor) disposed between the first housing 310 and the first protective cover 315. In an embodiment, the at least one conductive pattern 3151 may be disposed on an inner surface (e.g., the inner surface 315a of FIG. 4B) of the first protective cover 315 so as not to be visible from the outside. In an embodiment, the at least one conductive pattern 3151 may be used as part of the antenna A1 when electrically connected at at least one point to the conductive portion 316 used as an antenna. For example, the at least one conductive pattern 3151 may help improve radiation performance (e.g., gain) by increasing the effective volume of the antenna A1 operating through the conductive portion 316. In an embodiment, at least one conductive pattern 3151 may help shift the operating frequency or expand the bandwidth by extending the electrical length of the antenna A1 operating through the conductive portion 316. In some embodiments, the electronic device 300 may be configured to be disposed on an inner surface of the second protective cover 325 in substantially the same arrangement as that on the first protective cover 315 and to help improve the radiation performance of another antenna A2 operating through another conductive portion 326.

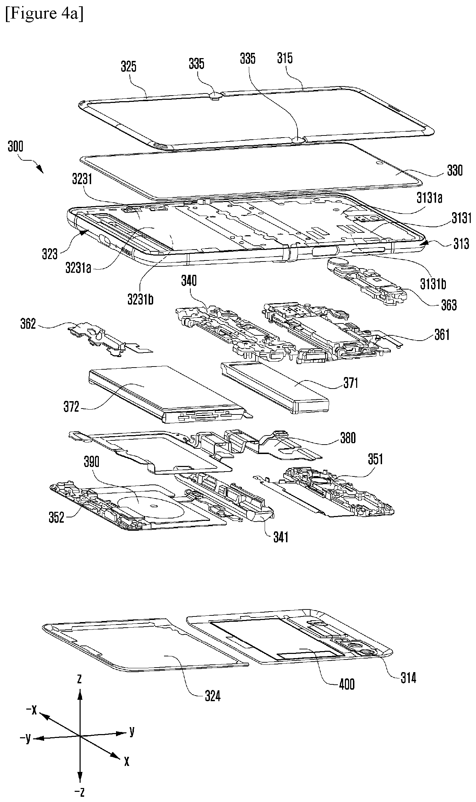

FIG. 4A is an exploded perspective view illustrating an electronic device according to various embodiments of the disclosure. FIG. 4B is a perspective view illustrating a first protective cover according to various embodiments of the disclosure.

With reference to FIGS. 4A and 4B, the electronic device 300 may include a first lateral member 313 (e.g., a first side frame), a second lateral member 323 (e.g., a second side frame), and a hinge module 340 (e.g., a hinge structure or a hinge assembly) that rotatably connects the first lateral member 213 and the second lateral member 223. In an embodiment, the electronic device 300 may include a first extension member 3131 that at least partially extends from the first lateral member 313, or a second extension member 3231 that at least partially extends from the second lateral member 323. In an embodiment, the first extension member 3131 may include a first surface 3131a facing a front direction (e.g., z-axis direction) of the electronic device 300 and a second surface 3131b facing the opposite direction (e.g., -z-axis direction) to the first surface 3131a. In an embodiment, the second extension member 3231 may include a third surface 3231a facing the front direction (e.g., z-axis direction) and a fourth surface 3231b facing the opposite direction (e.g., -z-axis direction) to the third surface 3231a. In an embodiment, the first extension member 3131 may be formed integrally with the first lateral member 313 or structurally coupled to the first lateral member 313. In an embodiment, the second extension member 3231 may be formed integrally with the second lateral member 323 or structurally coupled to the second lateral member 323. In an embodiment, the electronic device 300 may include a first display 330 disposed to be supported by the first surface 3131a of the first extension member 3131 and the third surface 3231a of the second extension member 3231. In an embodiment, the electronic device 300 may include a first rear cover 314 coupled to the first lateral member 313 and providing a first space (e.g., the first space 3101 of FIG. 2B) between the first rear cover 314 and the second surface 3131b of the first extension member 3131, and a second rear cover 324 coupled to the second lateral member 323 and providing a second space (e.g., the second space 3201 of FIG. 2B) between the second rear cover 324 and the fourth surface 3231b of the second extension member 3231. In an embodiment, the first lateral member 313 and the first rear cover 314 may be formed integrally. In an embodiment, the second lateral member 323 and the second rear cover 324 may be formed integrally. In an embodiment, the electronic device 300 may include a first housing (e.g., the first housing 310 of FIG. 2A) (e.g., a first housing structure) provided through the first lateral member 313, the first extension member 3131, and the first rear cover 314. In an embodiment, the electronic device 300 may include a second housing (e.g., the second housing 320 of FIG. 2A) (e.g., a second housing structure) provided through the second lateral member 323, the second extension member 3231, and the second rear cover 324. In an embodiment, the electronic device 300 may include a second display 400 disposed so as to be visible from the outside through at least a portion of the first rear cover 314 between the first rear cover 314 and the second surface 3131b of the first extension member 3131.

According to various embodiments, the electronic device 300 may include a first substrate 361 (e.g., a first printed circuit board (PCB) or a main printed circuit board) disposed in a first space between the first lateral member 313 and the first rear cover 314, a camera assembly 363, a first battery 371, or a first bracket 351. In an embodiment, the camera assembly 363 may include a plurality of camera devices (e.g., the camera devices 305 and 308 of FIGS. 2A and 3A) and be electrically connected to the first substrate assembly 361. In an embodiment, the first bracket 351 may provide a support structure and enhanced rigidity to support the first substrate 361 and/or the camera assembly 363.

According to various embodiments, the electronic device 300 may include a second substrate 362 (e.g., a second PCB or a sub PCB) disposed in a second space between the second lateral member 323 and the second rear cover 324, a conductive coil 390 (e.g., an antenna member), a second battery 372, or a second bracket 352. In an embodiment, the electronic device 300 may include a wiring member 380 (e.g., a flexible printed circuit board (FPCB)) disposed to extend from the first substrate 361 across the hinge module 340 to a plurality of electronic components (e.g., the second substrate 362, the second battery 372, or the conductive coil 390) disposed between the second lateral member 323 and the second rear cover 324, thereby providing an electrical connection. In an embodiment, the conductive coil 390 may operate as at least one of a near field communication (NFC) antenna, a wireless charging antenna, and/or a magnetic secure transmission (MST) antenna. For example, the conductive coil 390 may perform near field communication with an external device or wirelessly transmit and receive power for charging.

According to various embodiments, the electronic device 300 may include a hinge housing 341 (e.g., a hinge cover) configured to support the hinge module 340, exposed to the outside when the electronic device 300 is in a folded state (e.g., the folded state of FIG. 3A), and disposed so as not to be visible from the outside when retracted into the first space and/or the second space while the electronic device 300 is in an unfolded state (e.g., the unfolded state of FIG. 2A).

According to various embodiments, the electronic device 300 may include a first protective cover 315 coupled along the edge of the first lateral member 313. In an embodiment, the electronic device 300 may include a second protective cover 325 coupled along the edge of the second lateral member 323. In an embodiment, the first display 330 may be positioned such that an edge of a first planar portion (e.g., the first portion 330a of FIG. 3B) is protected by the first protective cover 315. In an embodiment, the first display 330 may be positioned such that an edge of a second planar portion (e.g., the second portion 330b of FIG. 3B) is protected by the second protective cover 325. In an embodiment, the electronic device 300 may include a protective cap 335 disposed to protect the edge of a flexible portion (e.g., the third portion 330c of FIG. 3B) corresponding to the hinge module 340 of the first display 330. In some embodiments, the protective cap 335 and/or the first and second protective covers 315 and 325 may be omitted.

According to exemplary embodiments of the disclosure, the electronic device 300 may include at least one conductive pattern 3151 disposed between the first lateral member 313 of the first housing 310 and the first protective cover 315. In an embodiment, the at least one conductive pattern 3151 may be disposed on an inner surface 315a of the first protective cover 315 so as not to be visible from the outside. In an embodiment, the at least one conductive pattern 3151 may be used as an additional antenna radiator electrically connected to at least a portion (e.g., the conductive portion 316 of FIG. 3A) of the first lateral member 313, which is connected to a wireless communication circuit (e.g., the wireless communication module 192 of FIG. 1) and used as an antenna (e.g., the antenna A1 of FIG. 3A). In an embodiment, the at least one conductive pattern 3151 may be in physical and direct contact with the conductive portion 316 at at least one point. In some embodiments, the at least one conductive pattern 3151 may be indirectly and electrically connected by being disposed at a position at which it is capable of coupling to the conductive portion. In an embodiment, the at least one conductive pattern 3151 may help improve radiation performance by increasing the effective volume of the antenna A1 to improve gain or by shifting the operating frequency band and/or expanding the bandwidth.

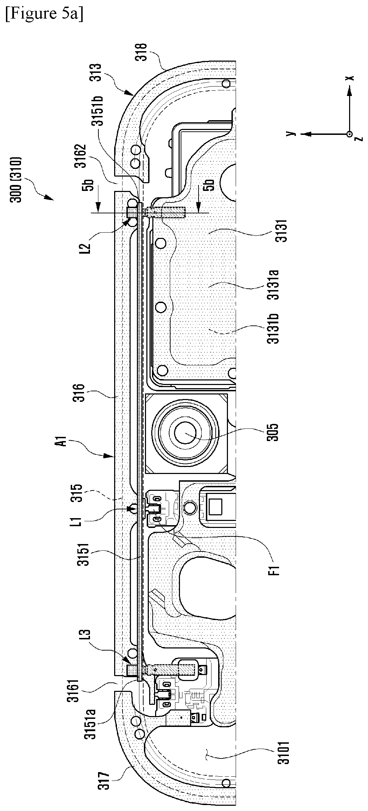

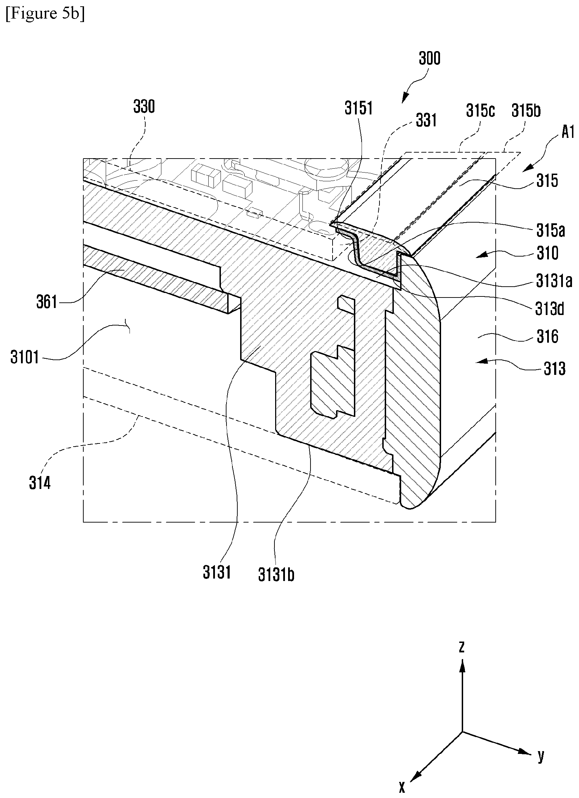

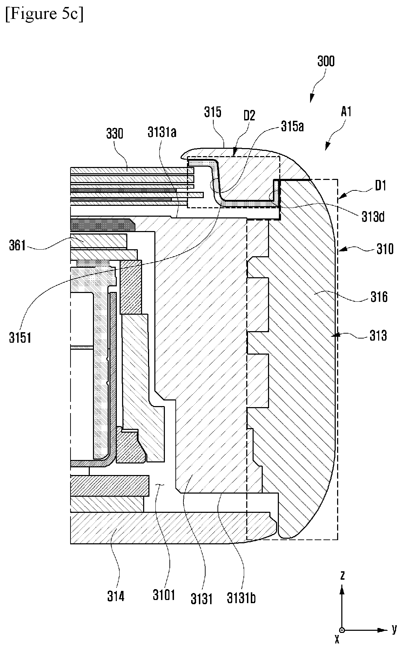

FIG. 5A is a diagram illustrating a portion of an electronic device including a conductive pattern according to various embodiments of the disclosure. FIG. 5B is a cross-sectional perspective view of an electronic device taken along line 5b-5b of FIG. 5A according to various embodiments of the disclosure. FIG. 5C is a cross-sectional view of an electronic device taken along line 5b-5b of FIG. 5A according to various embodiments of the disclosure.

With reference to FIGS. 5A to 5C, the electronic device 300 may include a first housing 310 and a second housing (e.g., the second housing 320 of FIG. 2B) foldably connected to the first housing 310 through a hinge module (e.g., the hinge module 340 of FIG. 2B). In an embodiment, the first housing 310 may include a first lateral member 313 at least partially formed of a conductive material (e.g., metal). In an embodiment, the first lateral member 313 may be disposed so as to be visible from the outside by being formed as at least part of the side surface (e.g., the first side surface 313a of FIG. 2B) of the electronic device 300. In an embodiment, the first lateral member 313 may include a first non-conductive portion 3161 (e.g., a first segment, a first slit, or a first gap), a second non-conductive portion 3162 (e.g., a second segment, a second slit, or a second gap) disposed spaced apart from the first non-conductive portion 3161, and a first conductive portion 316 interposed between the first non-conductive portion 3161 and the second non-conductive portion 3162. In an embodiment, the first lateral member 313 may include a second conductive portion 317 disposed opposite the first conductive portion 316 with the first non-conductive portion 3161 interposed therebetween, and a third conductive portion 318 disposed opposite the first conductive portion 316 with the second non-conductive portion 3162 interposed therebetween. In an embodiment, the first conductive portion 316 may operate as an antenna A1 configured to transmit and/or receive a wireless signal in a specified frequency band (e.g., legacy band) through the wireless communication circuit F1 (e.g., the wireless communication module 192 of FIG. 1) (e.g., a feed point or a feed line) disposed in an internal space 3101 of the electronic device 300 at a first point L1. In an embodiment, the second conductive portion 317 and/or the third conductive portion 318 may also be configured to operate as antennas for another frequency band. In an embodiment, the electronic device 300 may include a first extension member 3131 disposed in the internal space 3101. In an embodiment, the first extension member 3131 may extend from the first lateral member 313 or be structurally coupled to the first lateral member 313. In an embodiment, the first extension member 3131 may include a conductive material (e.g., metal) and a non-conductive material (e.g., polymer) coupled to the conductive material. In an embodiment, the first extension member 3131 may be formed by the conductive material and the non-conductive material being coupled by insert injection molding or through structural coupling.

According to various embodiments, the electronic device 300 may include a first protective cover 315 disposed along an outer edge of the first lateral member 313 and interposed between the first lateral member 313 and the first display 330 (e.g., flexible display). For example, the first protective cover 315 may be formed of a non-conductive material (e.g., dielectric). In an embodiment, the electronic device 300 may include a conductive pattern 3151 disposed on the inner surface 315a of the first protective cover 315. In an embodiment, the conductive pattern 3151 may be electrically connected to the first conductive portion 316 at a second point L2 between the first point L1 and the second non-conductive portion 3162. Through such an electrical connection structure, the conductive pattern 3151 may also operate as a single antenna radiator together with the first conductive portion 316, thereby helping increase the effective volume of the antenna A1. In an embodiment, the conductive pattern 3151 may be electrically connected to the first conductive portion 316 at a third point L3 between the first point L1 and the first non-conductive portion 3161. In an embodiment, the second point L2 or the third point L3 may be the distal ends of the first conductive portion 316 adjacent to the second non-conductive portion 3162 and the first non-conductive portion 3161, respectively. In some embodiments, the second point L2 and/or the third point L3 may be points on the first conductive portion 316 spaced apart from the second non-conductive portion 3162 and the first non-conductive portion 3161, respectively.

According to various embodiments, the conductive pattern 3151 and the first conductive portion 316 may be spaced apart by a specified distance. In an embodiment, the specified separation distance may be within about 3 mm. In an embodiment, the conductive pattern 3151 may be capacitively coupled to the first conductive portion 316. In an embodiment, the conductive pattern 3151 may be formed as a pattern on an inner surface 315a of the first protective cover 315. In some embodiments, the conductive pattern 3151 may include at least one conductive tape attached to the inner surface 315a of the first protective cover 315. In some embodiments, the conductive pattern 3151 may include at least one metal plate attached to the inner surface 315a of the first protective cover 315. In some embodiments, the conductive pattern 3151 may include a conductive paint applied to at least one point on the inner surface 315a of the first protective cover 315. In some embodiments, the conductive pattern 3151 may include at least one conductor embedded in the first protective cover 315 when the first protective cover 315 is injection molded. In an embodiment, when the conductive pattern 3151 is disposed on the inner surface 315a of the first protective cover 315, the conductive pattern 3151 may come into contact with the inner surface 313d of the first lateral member 313 simply by mounting the first protective cover 315 to the first lateral member 313 of the first housing 310 with the edge of the first display 330 interposed therebetween.

According to various embodiments, the conductive pattern 3151 may be used as an additional radiator for the antenna A1 by being electrically connected to at least one point on the first conductive portion 316. In an embodiment, the conductive pattern 3151 may be electrically connected by physically contacting the first conductive portion 316. In some embodiments, the conductive pattern 3151 may be spaced apart from the first conductive portion 316 and electrically connected to the first conductive portion 316 in a capacitively coupled manner. In some embodiments, at least a portion of the conductive pattern 3151 may be electrically connected to the ground of the electronic device 300.

According to various embodiments, the first protective cover 315 may include a first portion 315b (e.g., a first protective cover portion) that forms another portion of the side surface (e.g., the first side surface 313a of FIG. 2B) of the first lateral member 313 and/or a second portion 315c (e.g., a second protective cover portion) that extends from the first portion 315b and forms at least a portion of the front surface (e.g., the first surface 211 of FIG. 2B). In an embodiment, the conductive pattern 3151 may be disposed in the first portion 315b so as to be spaced apart from the side surface 331 of the first display 330. In some embodiments, the conductive pattern 3151 may be disposed in the second portion 315c so as to be spaced apart from the side surface 331 of the first display 330. In some embodiments, the conductive pattern 3151 may extend from at least a portion of the first portion 315b to at least a portion of the second portion 315c. In an embodiment, when the first display 330 is viewed from above, the conductive pattern 3151 may be positioned in an area corresponding to the first conductive portion 316. In some embodiments, the conductive pattern 3151 may be disposed to extend to at least a portion of the second conductive portion 317 or to at least a portion of the third conductive portion 318. In some embodiments, the conductive pattern 3151 may be disposed to have a shorter length than the first conductive portion 316. In some embodiments, the conductive pattern 3151 may be disposed at at least one position corresponding to at least a portion of the first conductive portion 316, at least a portion of the second conductive portion 317, or at least a portion of the third conductive portion 318.

According to various embodiments, in the absence of the conductive pattern 3151, the antenna A1 using the first conductive portion 316 may have a first effective volume D1, as illustrated in FIG. 5C. In an embodiment, the antenna A1 including the conductive pattern 3151 attached to the inner surface 315a of the first protective cover 315 and electrically connected to the first conductive portion 316 may additionally have a second effective volume D2 formed by the conductive pattern 3151, in addition to the first effective volume D1. An antenna A1 according to an exemplary embodiment of the disclosure may exhibit improved radiation performance by having a relatively large effective volume through the conductive pattern 3151.

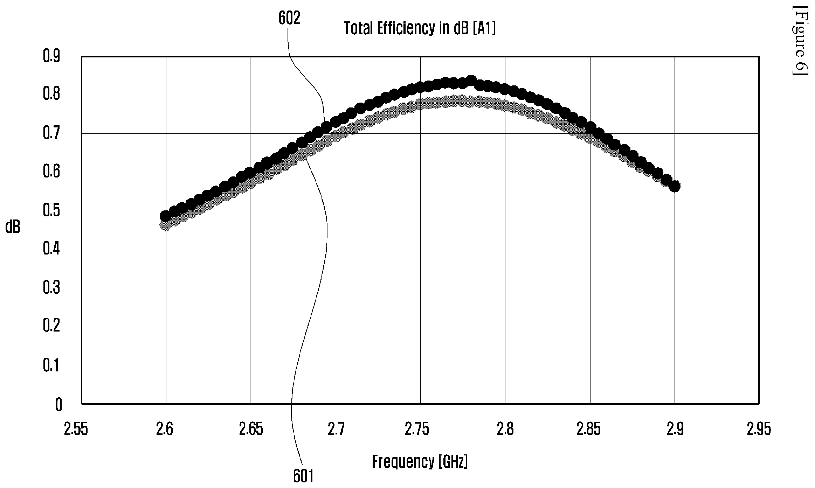

FIG. 6 is a graph comparing radiation performance of an antenna of FIG. 5A depending on the presence or absence of a conductive pattern according to various embodiments of the disclosure.

With reference to FIG. 6, it may be seen that, compared to when only the first conductive portion 316 is used as an antenna and the conductive pattern 3151 is not disposed on the inner surface 315a of the first protective cover 315 (graph 601), a relatively higher gain is achieved when the conductive pattern 3151 disposed on the inner surface 315a of the first protective cover 315 is electrically connected to the first conductive portion 316 and used as an additional radiator (graph 602). This may mean that the radiation performance of the antenna A1 is improved through an increase in the effective volume of the antenna A1 by using the conductive pattern 3151 as an additional radiator for the first conductive portion 316.

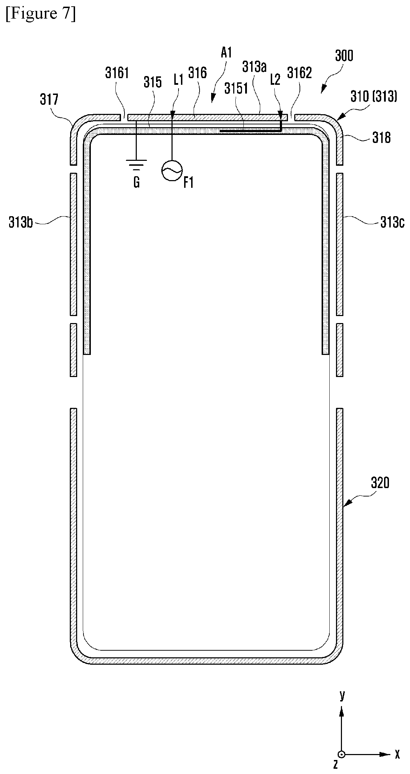

FIG. 7 is a diagram illustrating a constitution of an electronic device including a conductive pattern according to various embodiments of the disclosure.

In describing an electronic device 300 of FIG. 7, the same reference numerals are assigned to components substantially identical to those of the electronic device 300 of FIGS. 5A to 5C, and a detailed description thereof may be omitted.

With reference to FIG. 7, the electronic device 300 may include a first housing 310 and a second housing 320 foldably connected to the first housing 310 through the hinge module (e.g., the hinge module 340 of FIG. 2B). In an embodiment, the first housing 310 may include a first lateral member 313 forming at least a portion of the exterior of the electronic device 300. In an embodiment, the first lateral member 313 may include a first side surface 313a, a second side surface 313b extending vertically from one end of the first side surface 313a, and a third side surface 313c extending parallel to the second side surface 313b from the other end of the first side surface 313a. In an embodiment, the electronic device 300 may include a first conductive portion 316 disposed between a first non-conductive portion 3161 and a second non-conductive portion 3162 on the first side surface 313a. In an embodiment, the electronic device 300 may include a second conductive portion 317 disposed opposite the first conductive portion 316 with the first non-conductive portion 3161 interposed therebetween, and a third conductive portion 318 disposed opposite the first conductive portion 316 with the second non-conductive portion 3162 interposed therebetween. In an embodiment, the second conductive portion 317 may extend from the first side surface 313a to at least a portion of the second side surface 313b. In an embodiment, the third conductive portion 318 may extend from the first side surface 313a to at least a portion of the third side surface 313c. In some embodiments, the first conductive portion 316 may extend from the first side surface 313a to at least a portion of the second side surface 313b or to at least a portion of the third side surface 313c. In an embodiment, the first conductive portion 316 may be electrically connected to the wireless communication circuit F1 (e.g., the wireless communication module 192 of FIG. 1) disposed in the electronic device 300 through the first point L1. In an embodiment, the first conductive portion 316 may be electrically connected to the ground G of the electronic device 300 between the first point L1 and the first non-conductive portion 3161. For example, the ground G1 of the electronic device 300 may include a ground G of the first substrate (e.g., the first substrate 361 of FIG. 4) disposed in the first housing 310.

According to various embodiments, the electronic device 300 may include a protective cover 315 (e.g., a protective member, a decoration member, or a protective frame) disposed near the first conductive portion 316 in the first housing 310. In an embodiment, the electronic device 300 may include a conductive pattern 3151 disposed between the protective cover 315 and the first extension member (e.g., the first extension member 3131 of FIG. 5B) and/or the first lateral member 313. In an embodiment, the conductive pattern 3151 may be disposed on the inner surface (e.g., the inner surface 315a of FIG. 5B) of the protective cover 315. In some embodiments, the conductive pattern 3151 may be disposed on at least a portion of a non-conductive area of the first extension member 3131.

According to various embodiments, the conductive pattern 3151 may be electrically connected to the first conductive portion 316 at a second point L2 between the first point L1 and the second non-conductive portion 3162. In an embodiment, the second point L2 may be an open end of the first conductive portion 316 located near the second non-conductive portion 3162. In an embodiment, the first conductive portion 316 and the conductive pattern 3151 electrically connected to the first conductive portion 316 may operate as an antenna A1 configured to transmit or receive a wireless signal in a specified frequency band through the wireless communication circuit F1. In an embodiment, the conductive pattern 3151 may help extend the electrical length of the antenna A1.

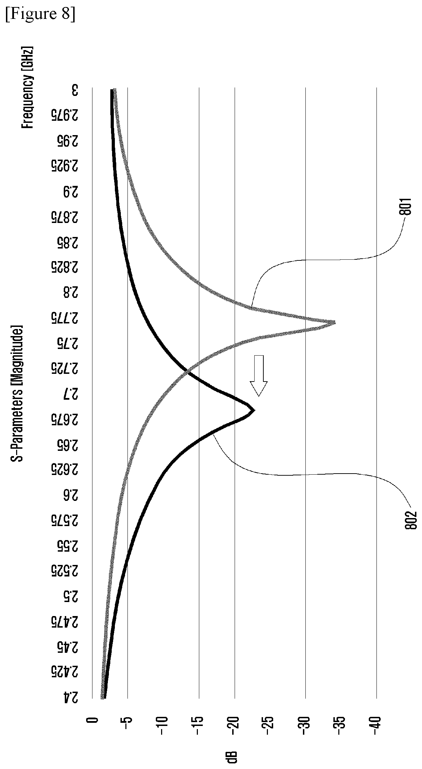

FIG. 8 is a graph comparing radiation performance of an antenna of FIG. 7 depending on the presence or absence of a conductive pattern according to various embodiments of the disclosure.

With reference to FIG. 8, it may be seen that, compared to the case where the conductive pattern 3151 is not disposed on the inner surface 315a of the first protective cover 315 and only the first conductive portion 316 is used as an antenna (graph 801), when the conductive pattern 3151 disposed on the inner surface 315a of the first protective cover 315 is electrically connected to the first conductive portion 316 and used as an additional radiator (graph 802), the operating frequency band shifts toward a relatively lower frequency band. This may indicate that the operating frequency band of the antenna A1 may shift as the conductive pattern 3151 is used as an additional radiator for the first conductive portion 316.

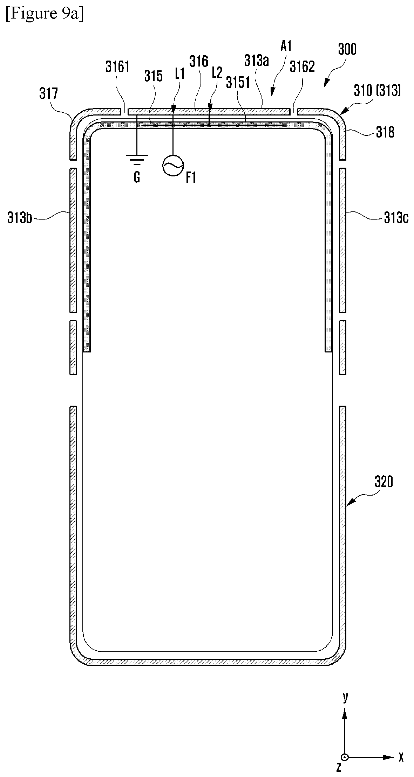

FIGS. 9A to 9G are diagrams illustrating various arrangement structures of conductive patterns in an electronic device according to various embodiments of the disclosure.

In describing an electronic device 300 of FIGS. 9A to 9G, the same reference numerals are assigned to components substantially identical to those of the electronic device 300 of FIG. 7, and a detailed description thereof may be omitted.

With reference to FIG. 9A, the first conductive portion 316 may be electrically connected to the wireless communication circuit F1 at a first point L1 between the first non-conductive portion 3161 and the second non-conductive portion 3162. In an embodiment, the conductive pattern 3151 disposed on the first protective cover 315 may be electrically connected to the first conductive portion 316 at a second point L2 between the first point L1 and the second non-conductive portion 3162. In an embodiment, the second point L2 may be located at or near a midpoint of the first conductive portion 316. In this case, the antenna A1 using the first conductive portion 316 and the conductive pattern 3151 may operate as a multi-band antenna over different frequency bands.

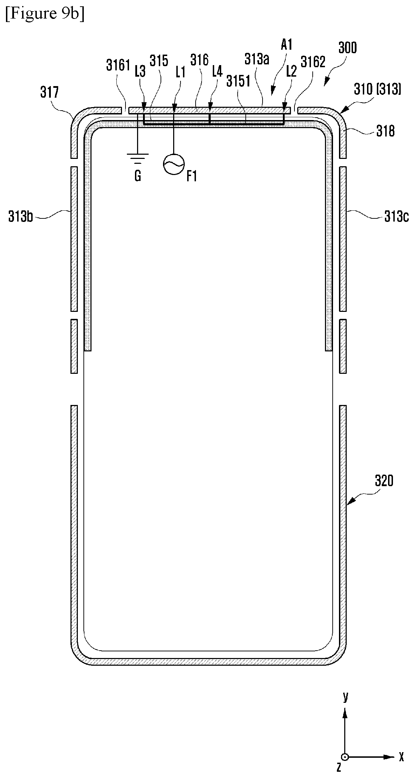

With reference to FIG. 9B, the first conductive portion 316 may be electrically connected to the wireless communication circuit F1 at a first point L1 between the first non-conductive portion 3161 and the second non-conductive portion 3162. In an embodiment, the conductive pattern 3151 disposed on the first protective cover 315 may be electrically connected to the first conductive portion 316 at a second point L2 between the first point L1 and the second non-conductive portion 3162. In an embodiment, the conductive pattern 3151 may be electrically connected to the first conductive portion 316 at a third point L3 between the first point L1 and the first non-conductive portion 3161. In an embodiment, the conductive pattern 3151 may be electrically connected to the first conductive portion 316 at a fourth point L4 between the first point L1 and the second point L2. In an embodiment, the antenna A1 may benefit from an increase in the effective volume by having an enhanced electrical connection structure in which the conductive pattern 3151 is electrically connected to the first conductive portion at three different points L2, L3, and L4.

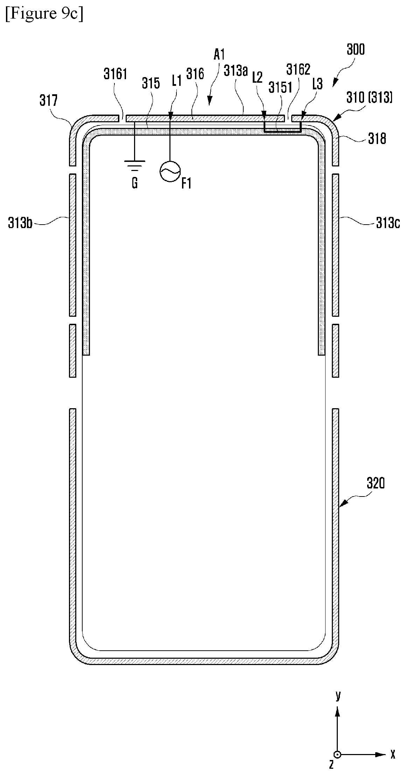

With reference to FIG. 9C, the first conductive portion 316 may be electrically connected to the wireless communication circuit F1 at the first point L1 between the first non-conductive portion 3161 and the second non-conductive portion 3162. In an embodiment, the conductive pattern 3151 disposed on the first protective cover 315 may be electrically connected to the first conductive portion 316 at the second point L2 between the first point L1 and the second non-conductive portion 3162. In an embodiment, the conductive pattern 3151 may be electrically connected to the third conductive portion 318 at the third point L3. In an embodiment, the third conductive portion 318 may also be used as the antenna A1 together with the first conductive portion 316 through the electrical connection structure of the conductive pattern 3151. For example, such a structure may be advantageous when the second non-conductive portion 3162 of the first housing 310 needs to be aligned with the non-conductive portion (e.g., the non-conductive portion 3262 of FIG. 3A) of the second housing 320 in a folded state and the third conductive portion 318 needs to be used as an extended antenna radiator for the first conductive portion 316.

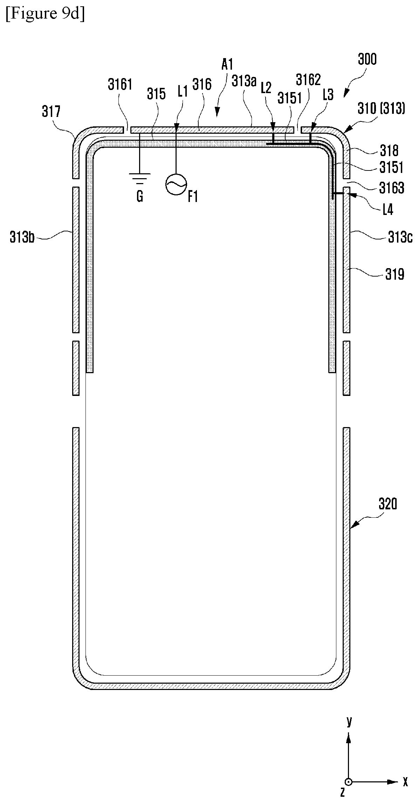

With reference to FIG. 9D, the electronic device 300 may include a fourth conductive portion 319 disposed opposite the third conductive portion 318 through the third non-conductive portion 3163. In an embodiment, the first conductive portion 316 may be electrically connected to the wireless communication circuit F1 at the first point L1 between the first non-conductive portion 3161 and the second non-conductive portion 3162. In an embodiment, the conductive pattern 3151 disposed on the first protective cover 315 may be electrically connected to the first conductive portion 316 at the second point L2 between the first point L1 and the second non-conductive portion 3162. In an embodiment, the conductive pattern 3151 may be electrically connected to the third conductive portion 318 at the third point L3. In an embodiment, the conductive pattern 3151 may be electrically connected to the fourth conductive portion 319 at the fourth point L4. In an embodiment, the third conductive portion 318 and the fourth conductive portion 319 may also be used as the antenna A1 together with the first conductive portion 316 through the electrical connection structure of the conductive pattern 3151.

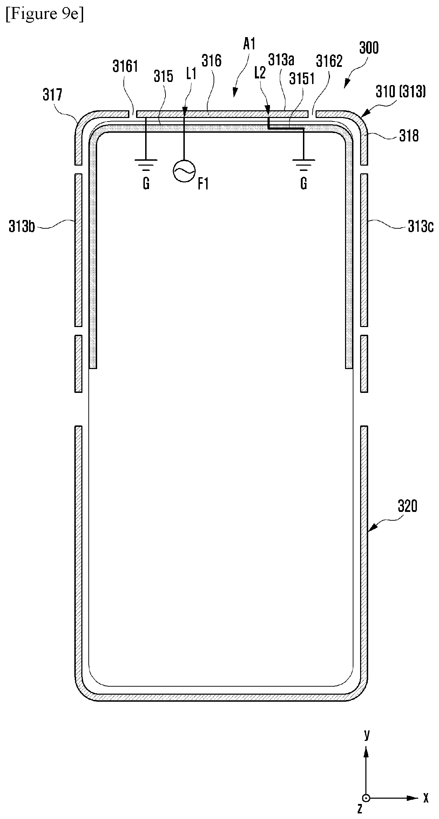

With reference to FIG. 9E, the first conductive portion 316 may be electrically connected to the wireless communication circuit F1 at the first point L1 between the first non-conductive portion 3161 and the second non-conductive portion 3162. In an embodiment, one end of the conductive pattern 3151 disposed on the first protective cover 315 may be electrically connected to the first conductive portion 316 at the second point L2 between the first point L1 and the second non-conductive portion 3162. In an embodiment, the other end of the conductive pattern 3151 may be electrically connected to the ground G of the electronic device 300. In this case, if a design constraint prevents a portion of the first conductive portion 316 from being connected to the ground G, the conductive pattern 3151 may be used to connect the portion to the ground, thereby facilitating an efficient design change.

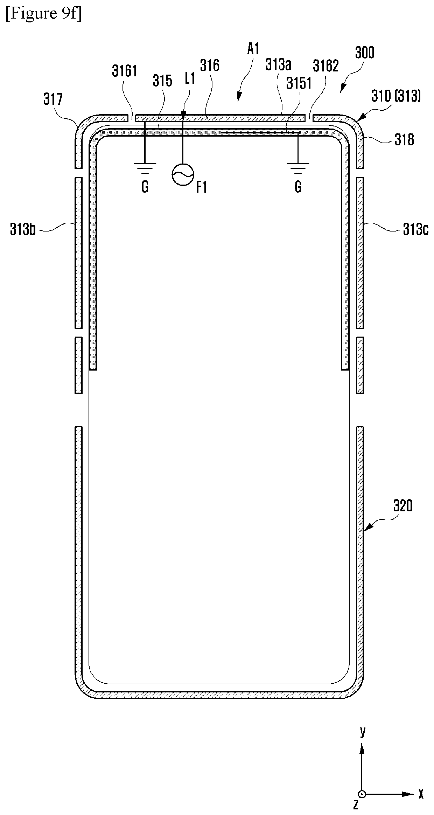

With reference to FIG. 9F, the first conductive portion 316 may be electrically connected to the wireless communication circuit F1 at the first point L1 between the first non-conductive portion 3161 and the second non-conductive portion 3162. In an embodiment, the conductive pattern 3151 disposed on the first protective cover 315 may be at least partially disposed to be capacitively coupled to the first conductive portion 316. For example, the conductive pattern 3151 may be electromagnetically coupled to the first conductive portion 316. In an embodiment, the conductive pattern 3151 may be electrically connected to the ground G of the electronic device 300. In this case, the antenna A1 using the first conductive portion 316 may benefit from a shift toward a low frequency band or an expanded bandwidth through the conductive pattern 3151 disposed to be capacitively coupled to the first conductive portion 316.

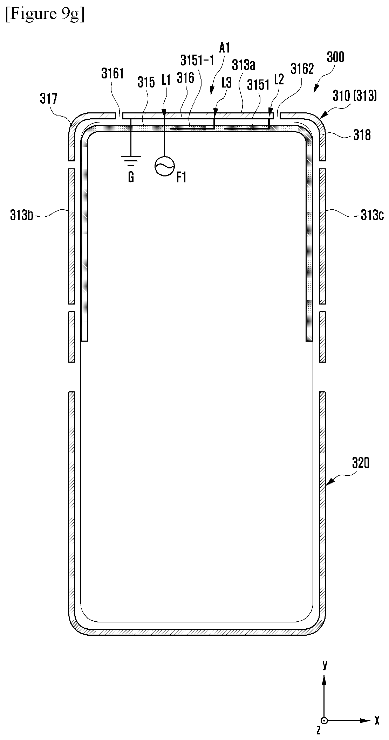

With reference to FIG. 9G, the first conductive portion 316 may be electrically connected to the wireless communication circuit F1 at the first point L1 between the first non-conductive portion 3161 and the second non-conductive portion 3162. In an embodiment, the conductive pattern may include a first conductive pattern 3151 electrically connected to the first conductive portion 316 at the second point L2 between the first point L1 and the second non-conductive portion 3162, and a second conductive pattern 3151-1 electrically connected to the first conductive portion 316 at the third point L3 between the second point L2 and the first point L1. In an embodiment, the first conductive pattern 3151 and the second conductive pattern 3151-1 may be spaced apart from each other by a predetermined interval on the first protective cover 315. In this case, the antenna A1 using the first conductive portion 316 and the two conductive patterns 3151 and 3151-1 may operate as a multi-band antenna in different frequency bands. In some embodiments, the conductive pattern may include three or more conductive patterns disposed on the first protective cover 315 and spaced apart from each other, with at least one of the conductive patterns electrically connected to the first conductive portion 316.

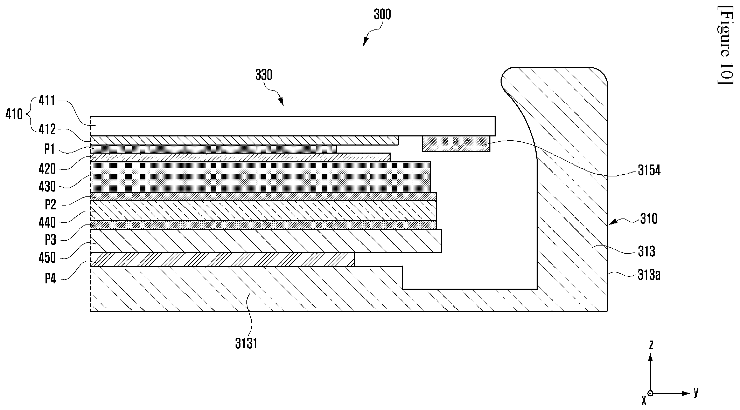

FIG. 10 is a partial cross-sectional view illustrating an electronic device including a conductive layer according to various embodiments of the disclosure.

With reference to FIG. 10, the electronic device 300 may include a first display 330 (e.g., a flexible display) disposed to be supported by the first housing 310 and the second housing (e.g., the second housing 320 of FIG. 2B). In an embodiment, the first display 330 may include a display panel 430, a polarizing layer (POL) 420 and a window layer 410 laminated on an upper surface (e.g., in the +z-axis direction) of the display panel 430, and a polymer layer 440 and/or a support plate 450 laminated on a rear surface (e.g., in the -z-axis direction) of the display panel 430. In an embodiment, the window layer 410, the POL 420, the display panel 430, the polymer layer 440, and/or the support plate 450 may be attached to each other through adhesive members P1, P2, P3, and P4 (or an adhesive). In some embodiments, the support plate 450 may be attached, through an adhesive member, to an additional reinforcing plate (not illustrated) disposed between the support plate 450 and the housings 110 and 120. In an embodiment, the window layer 410 may include a first layer 411 (e.g., a polyethylene terephthalate (PET) layer or a thermoplastic polyurethane (TPU) layer) formed of a polymer, and a second layer 412 (e.g., an ultra-thin glass (UTG) layer) disposed below the first layer 411 and formed of glass. In some embodiments, the POL 420 may be omitted.

According to various embodiments, in the electronic device 300, the protective cover (e.g., the first protective cover 315 of FIG. 5B) disposed to protect an edge of the first display 330 may be omitted. In this case, in an embodiment, a conductive pattern 3154 (e.g., the conductive pattern 3151 of FIG. 2B) may be disposed on a rear surface of the first layer 411 of the window layer 410. In some embodiments, the conductive pattern 3154 may be disposed on the second layer 412 of the window layer 410. In some embodiments, the conductive pattern 3154 may be disposed on an outer surface of a molding member applied and cured to protect the edge of the first display 330, or may be embedded in the molding member.

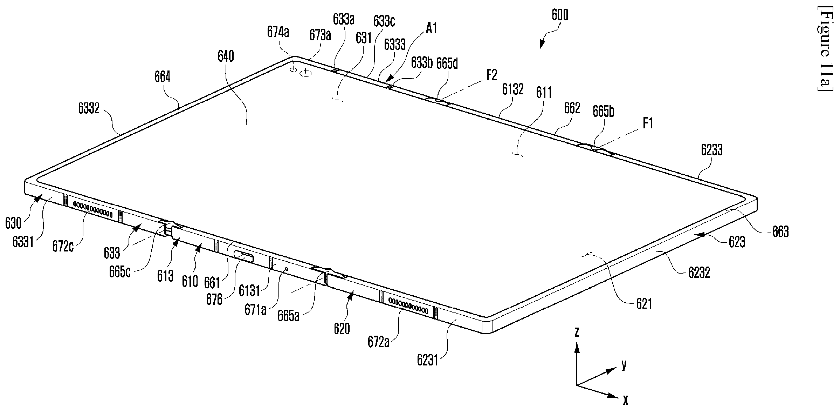

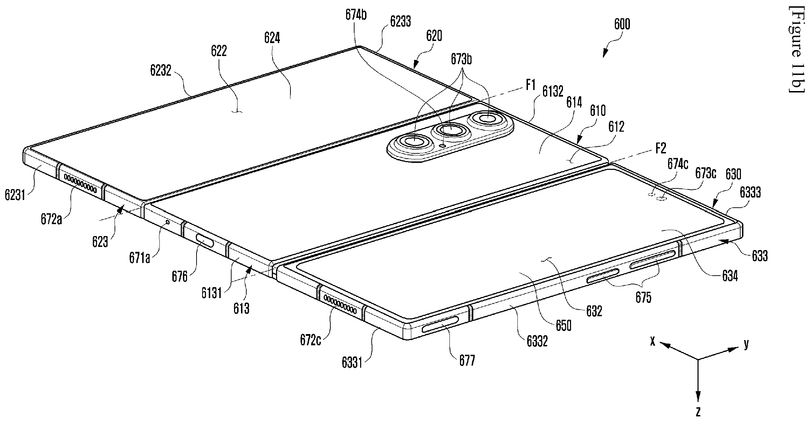

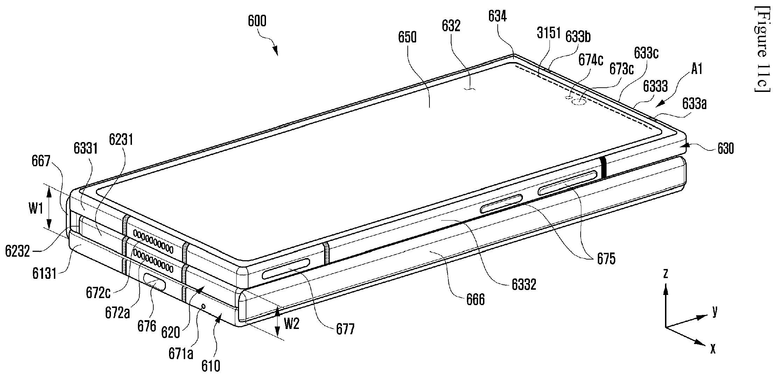

FIG. 11A is a front perspective view illustrating a multi-foldable electronic device in an unfolded state according to various embodiments of the disclosure. FIG. 11B is a rear perspective view illustrating a multi-foldable electronic device in an unfolded state according to various embodiments of the disclosure. FIG. 11C is a diagram illustrating one surface of a multi-foldable electronic device in a folded state according to various embodiments of the disclosure.

A multi-foldable electronic device 600 of FIGS. 11A to 11C may be at least partially similar to the electronic device 101 of FIG. 1, or may further include components according to other embodiments of the multi-foldable electronic device.

With reference to FIGS. 11A to 11C, the multi-foldable electronic device 600 (e.g., a portable communication device or an electronic device) may include a first housing 610, a second housing 620 rotatably connected to the first housing 610 about a first folding axis F1 via a first hinge assembly (not illustrated) in the direction (e.g., x-axis direction) of one side (e.g., the right side) of the first housing 610, and a third housing 630 (e.g., a third housing portion) rotatably connected to the first housing 610 about a second folding axis F2 via a second hinge assembly (not illustrated) in the direction (e.g., -x-axis direction) of the other side (e.g., the left side) of the first housing 610. In an embodiment, the first hinge assembly may include a first hinge housing 666 that accommodates at least one first hinge module (e.g., a first hinge device or a first hinge module) connecting the first housing 610 and the second housing 620, and the second hinge assembly may include a second hinge housing 667 that accommodates at least one second hinge module (e.g., a second hinge device or a second hinge module) connecting the first housing 610 and the third housing 630. In an embodiment, the size of at least one first hinge module (e.g., a narrow hinge module) of the first hinge assembly connecting the first housing 610 and the second housing 620 may be smaller than the size of at least one second hinge module (e.g., a wide hinge module) of a second hinge assembly connecting the first housing 610 and the third housing 630 and folding the flexible display 640 in a folded state. Through such a constitution, the second hinge housing 667 may have a first receiving width W1, and the first hinge housing 666 may have a second receiving width W2 smaller than the first receiving width W1. In an embodiment, the multi-foldable electronic device 600 may include a flexible display 640 (e.g., a first display) disposed to be supported by the first housing 610, the second housing 620, and the third housing 630. In an embodiment, the multi-foldable electronic device 600 may include a sub-display 650 (e.g., a second display) disposed in the third housing 630. In this document, a surface on which the flexible display 640 is disposed may be defined as a front surface of the multi-foldable electronic device 600, and a surface opposite to the front surface may be defined as a rear surface of the multi-foldable electronic device 600. In an embodiment, a surface surrounding the space between the front surface and the rear surface may be defined as a side surface of the electronic device 600.

According to various embodiments, the first housing 610 may include a first surface 611, a second surface 612 facing away from the first surface 611, and a first lateral member 613 surrounding a first space between the first surface 611 and the second surface 612. In an embodiment, at least a portion of the first lateral member 613 may form at least a portion of the side surface of the multi-foldable electronic device 600. In an embodiment, the first lateral member 613 may include a first side surface 6131 and a second side surface 6132 disposed opposite the first side surface 6131. In an embodiment, the first housing 610 may include a first rear cover 614 coupled to the first lateral member 613. In an embodiment, the first space may be formed by the first rear cover 614 coupled to the first lateral member 613 at the second surface 612 of the first housing 610.

According to various embodiments, the second housing 620 may include a third surface 621, a fourth surface 622 facing away from the third surface 621, and a second lateral member 623 surrounding a second space between the third surface 621 and the fourth surface 622. In an embodiment, at least a portion of the second lateral member 623 may form at least a portion of the side surface of the multi-foldable electronic device 600. In an embodiment, the second lateral member 623 may include a third side surface 6231, a fourth side surface 6232 extending from the third side surface 6231 in a direction perpendicular thereto, and a fifth side surface 6233 extending from the fourth side surface 6232 and parallel to the third side surface 6231. In an embodiment, the second housing 620 may include a second rear cover 624 coupled to the second lateral member 623. In an embodiment, the second space may be formed by the second rear cover 624 coupled to the second lateral member 623 at the fourth surface 622.

According to various embodiments, the third housing 630 may include a fifth surface 631, a sixth surface 632 facing away from the fifth surface 631, and a third lateral member 633 surrounding a third space between the fifth surface 631 and the sixth surface 632. In an embodiment, at least a portion of the third lateral member 633 may form at least a portion of the side surface of the multi-foldable electronic device 600. In an embodiment, the third lateral member 633 may include a sixth side surface 6331, a seventh side surface 6332 extending from the sixth side surface 6331 in a direction perpendicular thereto, and an eighth side surface 6333 extending from the seventh side surface 6332 and parallel to the sixth side surface 6331. In an embodiment, the third space may be formed by a third rear cover 634 coupled to the third lateral member 633 at the sixth side surface 6331.

According to various embodiments, the multi-foldable electronic device 600 may be configured such that, in an unfolded state (e.g., a first state), the first housing 610, the second housing 620, and the third housing 630 are arranged side by side so that the first surface 611, the third surface 621, and the fifth surface 631 face in the same direction. In an embodiment, the multi-foldable electronic device 600 may be configured such that, in a folded state (e.g., a second state), the first housing 610, the second housing 620, and the third housing 630 are positioned in a stacked manner so that the first surface 611 and the third surface 621 face each other, and the fourth surface 622 and the fifth surface 631 face each other. In this case, the second surface 612 and the sixth surface 632 may be visible from the outside, and the third surface 621 and the fourth surface 622 may be positioned so as not to be visible from the outside by the first housing 610 and the third housing 630. In an embodiment, the sub-display 650 may be disposed to be visible from the outside through at least a portion of the sixth surface 632 in the unfolded state and/or the folded state.

According to various embodiments, the multi-foldable electronic device 600 may include a first protective cover 661 (e.g., a first decoration member) and a second protective cover 662 (e.g., a second decoration member), which are disposed on the first housing 610 so as to cover the edge of the flexible display 640. In an embodiment, the first protective cover 661 may be disposed along the first side surface 6131 of the first housing 610, and the second protective cover 662 may be disposed along the second side surface 6132. In an embodiment, the edge of the flexible display 640 corresponding to the first housing 610 may be concealed from view from the outside by the first and second protective covers 661 and 662. In an embodiment, the multi-foldable electronic device 600 may include a third protective cover 663 (e.g., a third decoration member), which is disposed on the second housing 620 so as to cover the edge of the flexible display 640. In an embodiment, the third protective cover 663 may be disposed along the third side surface 6231, the fourth side surface 6232, and the fifth side surface 6233 of the second housing 620. In an embodiment, the edge of the flexible display 640 corresponding to the second housing 620 may be concealed from view from the outside by the third protective cover 663. In an embodiment, the multi-foldable electronic device 600 may include a fourth protective cover 664 (e.g., a fourth decoration member), which is disposed on the third housing 630 so as to cover the edge of the flexible display 640. In an embodiment, the fourth protective cover 664 may be disposed along the sixth side surface 6331, the seventh side surface 6332, and the eighth side surface 6333 of the third housing 630. In an embodiment, the edge of the flexible display 640 corresponding to the third housing 630 may be concealed from view from the outside by the fourth protective cover 664. In some embodiments, at least one of the first, second, third, or fourth protective covers 661, 662, 663, or 664 may be omitted.

According to various embodiments, the multi-foldable electronic device 600 may include a first protective cap 665a interposed between the first protective cover 661 and the third protective cover 663 and disposed to cover at least a portion of the edge of the flexible display 640, and a second protective cap 665b interposed between the second protective cover 662 and the third protective cover 663 and disposed to cover at least a portion of the edge of the flexible display 640. In an embodiment, the multi-foldable electronic device 600 may include a third protective cap 665c interposed between the first protective cover 661 and the fourth protective cover 664 and disposed to cover at least a portion of the edge of the flexible display 640, and a fourth protective cap 665d interposed between the second protective cover 662 and the fourth protective cover 664 and disposed to cover at least a portion of the edge of the flexible display 640. In an embodiment, at least one of the first, second, third, or fourth protective caps 665a, 665b, 665c, or 665d may be omitted.

According to various embodiments, the multi-foldable electronic device 600 may include at least one electronic component disposed on at least one of the first housing 610, the second housing 620, or the third housing 630. In an embodiment, at least one electronic component may include a flexible display 640 (e.g., a first display) disposed across the first housing 610, the second housing 620, and the third housing 630, a sub-display 650 (e.g., a second display) disposed on the third housing 630, at least one of microphones 671a and 671b (e.g., an input module or an input device), at least one of speakers 672a, 672b, 672c, or 672d (e.g., an audio output module or an audio output device), at least one of cameras 673a, 673b, or 673c (e.g., a camera module or a camera device), at least one of sensors 674a, 674b, and 674c (e.g., a sensor module), at least one key button 675 (e.g., an input device or a physical key), a connector port 676, or a socket device 677. In some embodiments, the electronic device 600 may further include at least one other component. In some embodiments, at least one of the above-described components may be omitted.

According to various embodiments, the flexible display 640 may be disposed in an accommodation space formed by the housings 610, 620, and 630. For example, the flexible display 640 may be disposed in a recess formed by the housings 610, 620, and 630, and be disposed to occupy substantially most of the front surface of the electronic device 600 when the electronic device 600 is in an unfolded state. In an embodiment, the sub-display 650 may be disposed in the third housing 630 so as to be visible from the outside through the third rear cover 634.

According to various embodiments, at least one of the microphones 671a and 671b may include a first microphone 671a disposed through the first side surface 6131 of the first housing 610, and a second microphone 671b disposed through the second side surface 6132 of the first housing 610. In some embodiments, at least one of the microphones 671a and 671b may be disposed on the third side surface 6231 and/or the fifth side surface 6233 of the second housing 620. In some embodiments, at least one of the microphones 671a and 671b may be disposed on the sixth side surface 6331 and/or the eighth side surface 6333 of the third housing 630.

In various embodiments, at least one of the speakers 672a and 672c may include a first speaker 672a disposed to emit sound through the third side surface 6231 of the second housing 620 and a second speaker 672c disposed to emit sound through the sixth side surface 6331 of the third housing 630. In an embodiment, at least one of the speakers 672a and 672c may be symmetrically disposed to implement stereo sound (e.g., three-dimensional sound) in the unfolded or folded state of the multi-foldable electronic device 200.

According to various embodiments, at least one of the cameras 673a, 673b, and 673c may include a first camera 673a disposed in a third space of the third housing 630 and through the fifth surface 631 of the third housing 630, a second camera 673b disposed through the second surface 612 of the first housing 610, and/or a third camera 673c disposed through the sixth surface 632 of the third housing 630. In an embodiment, at least one of the cameras 673a, 673b, and 673c may include one or more lenses, image sensors, and/or an image signal processor. In some embodiments, at least one of the cameras 673a, 673b, and 673c may include two or more lenses (e.g., wide-angle and/or telephoto lenses) and image sensors, and be disposed together on any one surface of any one of the first housing 610, the second housing 620, or the third housing 630.

According to various embodiments, at least one of the sensors 674a, 674b, and 674c may generate an electrical signal or data value corresponding to an internal operating state or an external environmental state of the multi-foldable electronic device 600. In an embodiment, at least one of the sensors 674a, 674b, and 674c may include a first sensor 674a disposed on the fifth surface 631 of the third housing 630, a second sensor 674b disposed on the second surface 612 of the first housing 610, and/or a third sensor 674c disposed on the sixth surface 632 of the third housing 630. In some embodiments, at least one of the sensors 674a, 674b, and 674c may include at least one of a gesture sensor, a grip sensor, a color sensor, an infrared (IR) sensor, an illuminance sensor, an ultrasonic sensor, an iris recognition sensor, or a distance detection sensor (e.g., a time of flight (TOF) sensor or a light detection and ranging (LiDAR) sensor).

According to various embodiments, at least one key button 675 may be disposed on the seventh side surface 6332 of the third housing 630. This may help improve usability by arranging the multi-foldable electronic device 600 so that the sixth surface 632 faces upward for use the sub-display 650 when the multi-foldable electronic device 600 is in the folded state and the at least one key button 675 is positioned on the right side. In some embodiments, the at least one key button 675 may be disposed on at least one of the first side surface 6131 or the second side surface 6132 of the first housing 610, the third side surface 6231 or the fifth side surface 6233 of the second housing 620, or the sixth side surface 6331 or the eighth side surface 6333 of the third housing 630, each of which is usable when the multi-foldable electronic device 600 is in the unfolded state and/or the folded state.

According to various embodiments, the connector port 676 may be disposed through the first side surface 6131 of the first housing 610. In an embodiment, the connector port 676 may include a connector (e.g., a USB connector or an IF module (interface connector port module)) structure for transmitting and receiving power and/or data to and from an external electronic device. In some embodiments, the connector port 676 may be disposed on at least one of the second side surface 6132 of the first housing 610, the third side surface 6231, the fourth side surface 6232, or the fifth side surface 6233 of the second housing 620, or the sixth side surface 6331, the seventh side surface 6332, or the eighth side surface 6333 of the third housing 630, each of which is usable when the multi-foldable electronic device 600 is in the unfolded state and/or the folded state.

According to various embodiments, the socket device 677 may be disposed on the seventh side surface 6332 of the third housing 630, which is usable even when the multi-foldable electronic device 600 is in the folded state. In an embodiment, the socket device 677 may include a retractable tray coupled to the seventh side surface 6332 to accommodate a SIM card or an external memory card.

According to various embodiments, at least one of at least one of the microphones 671a and 671b, at least one of the speakers 672a and 672c, at least one key button 675, the connector port 676, or the socket device 677 may be exposed to an external environment through at least one hole (e.g., a through hole) formed in the first housing 610, the second housing 620, and/or the third housing 630.

According to various embodiments, the multi-foldable electronic device 600 may include a conductive portion 633c configured to operate as an antenna A1 via the wireless communication circuit (e.g., the wireless communication module 192 of FIG. 1) and interposed between a pair of spaced-apart non-conductive portions 633a and 633b on the eighth side surface 6333 of the third housing 630. In an embodiment, the electronic device 630 may include a conductive pattern 3151 interposed between the third lateral member 633 and the third rear cover 634. In an embodiment, the conductive pattern 3151 may be disposed on at least a portion of an inner surface of the third rear cover 634, the third lateral member 633, or the edge of the sub-display 650, as described above, and at least one point thereof may be electrically connected to the conductive portion 633c, thereby helping improve the radiation performance of the antenna A1.

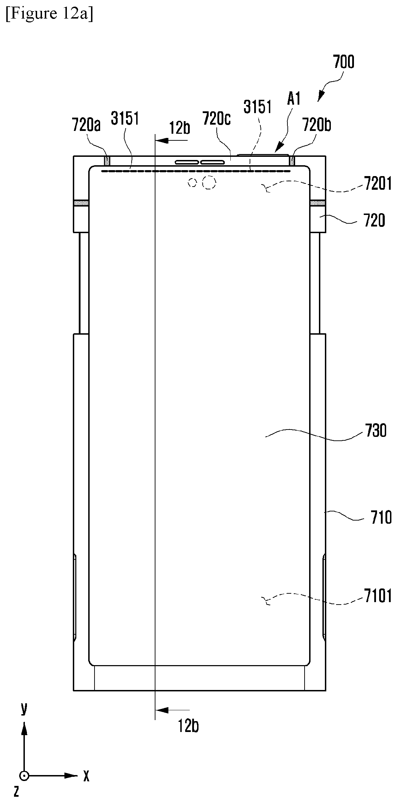

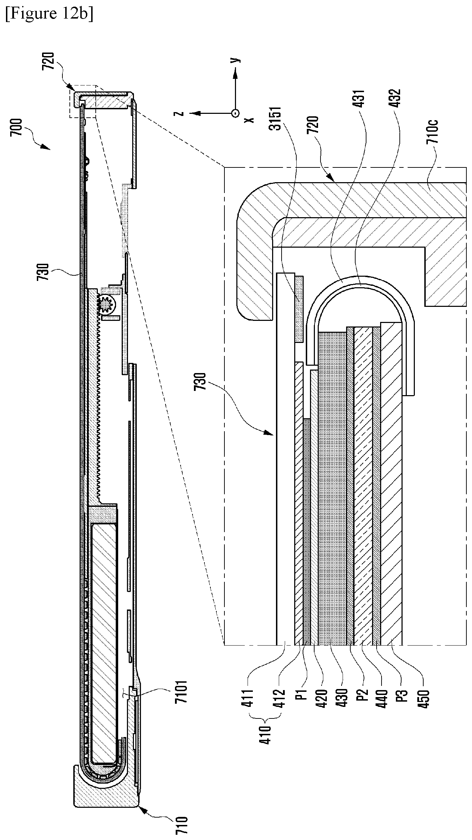

FIG. 12A is a plan view illustrating an electronic device in an extended state according to various embodiments of the disclosure. FIG. 12B is a cross-sectional view of an electronic device taken along line 12b-12b of FIG. 12A according to various embodiments of the disclosure.

An electronic device 700 of FIGS. 12A and 12B may be at least partially similar to the electronic device 101 of FIG. 1, or may further include components according to other embodiments of the electronic device.

With reference to FIGS. 12A and 12B, the electronic device 700 (e.g., a slidable electronic device or a rollable electronic device) may include a first housing 710 and a second housing 720 slidably coupled to the first housing 710 in a specified direction over a specified reciprocating distance. In an embodiment, the electronic device 700 may include a flexible display 730 fixed to at least a portion of the second housing 720 and having a variable display area by sliding into and out of the internal space 7101 of the first housing 710 according to the sliding movement of the second housing 720. For example, the flexible display 730 may have a first display area when the second housing 720 is extended from the first housing 710 in a first direction (e.g., the y-axis direction). In an embodiment, the flexible display 730 may have a second display area smaller than the first display area when the second housing 720 is retracted in a second direction (e.g., -y-axis direction) opposite to the first direction.

According to various embodiments, the flexible display 730 may have a stacked structure substantially identical to that of the first display 330 of FIG. 10. In an embodiment, the flexible display 730 may include a display panel 430, a POL 420 and a window layer 410 laminated on an upper surface of the display panel 430, and a polymer layer 440 and/or a support plate 450 laminated on a rear surface of the display panel 430. In an embodiment, the flexible display 730 may include a bending portion 432 and a protective layer 431, each extending from the display panel 430 and disposed in a folded manner on the rear surface of the support plate 450. In an embodiment, the flexible display 730 may include a control circuit (e.g., a display IC (DDI)) (not illustrated) disposed in the bending portion 432.

According to various embodiments, the electronic device 700 may include a conductive portion 720c configured to operate as the antenna A1 via the wireless communication circuit (e.g., the wireless communication module 192 of FIG. 1) and interposed between a pair of spaced-apart non-conductive portions 720a and 720b in the second housing 720. In an embodiment, the electronic device 630 may include a conductive pattern 3151 disposed on a rear surface of the window layer 410 (e.g., the first layer 411). In an embodiment, at least one point of the conductive pattern 3151 may be electrically connected to the conductive portion 720c, thereby helping improve the radiation performance of the antenna A1.

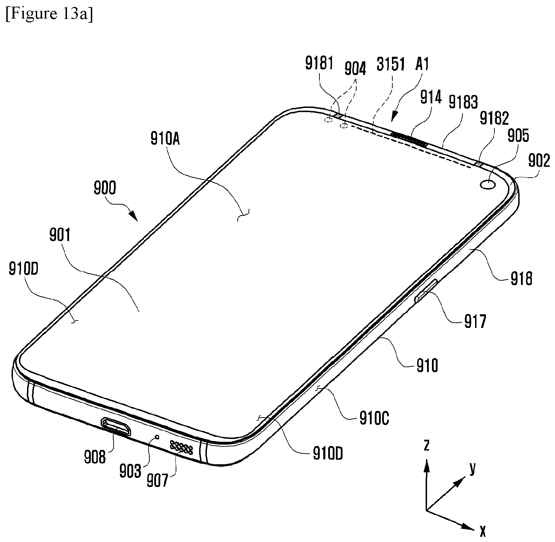

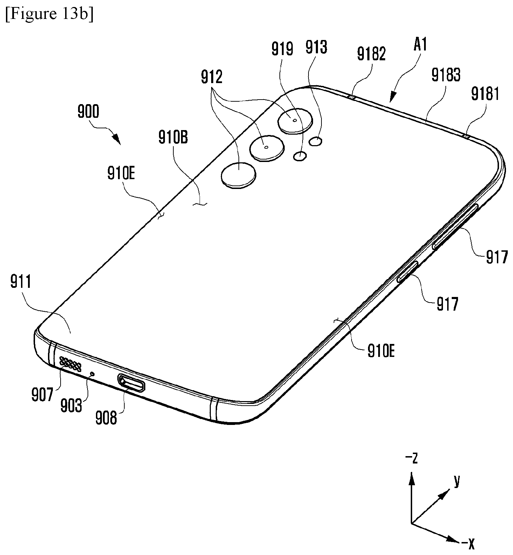

FIG. 13A is a front perspective view illustrating an electronic device according to various embodiments of the disclosure. FIG. 13B is a rear perspective view illustrating an electronic device according to various embodiments of the disclosure.

An electronic device 900 of FIGS. 13A and 13B may be at least partially similar to the electronic device 101 of FIG. 1, or may further include components according to other embodiments of the electronic device.

With reference to FIGS. 13A and 13B, the electronic device 900 may include a housing 910 including a first surface (or a front surface) 910A, a second surface (or a rear surface) 910B, and a side surface 910C surrounding the space between the first surface 910A and the second surface 910B. In other embodiments (not illustrated), the housing 910 may refer to a structure forming some of the first surface 910A, the second surface 910B, and the side surface 910C of FIG. 13A. In an embodiment, the first surface 910A may be formed by a front plate 902 (e.g., a glass plate including various coating layers, or a polymer plate) whose at least a portion is substantially transparent. The second surface 910B may be formed by a rear plate 911 that is substantially opaque. The rear plate 911 may be formed of, for example, coated or colored glass, ceramic, polymer, metal (e.g., aluminum, stainless steel (STS), or magnesium), or a combination of at least two of the above materials. The side surface 910C may be formed by a side bezel structure (or a lateral member) 918 including metal and/or polymer, which is coupled to the front plate 902 and the rear plate 911. In some embodiments, the rear plate 911 and the side bezel structure 918 may be formed integrally and include the same material (e.g., a metallic material such as aluminum).

In an illustrated embodiment, the front plate 902 may include a first area 910D that curves seamlessly from the first surface 910A toward the rear plate at both ends of the long edge of the front plate 902. In the illustrated embodiment (see FIG. 13B), the rear plate 911 may include a second area 910E that curves seamlessly from the second surface 910B toward the front plate 902 at both ends of the long edge. In some embodiments, the front plate 902 or the rear plate 911 may include only one of the first area 910D or the second area 910E. In some embodiments, the front plate 902 may not include the first area and the second area, but may include only a flat surface disposed parallel to the second surface 910B. In the above embodiments, when viewed from the side of the electronic device 900, the side bezel structure 918 may have a first thickness (or width) on the side that does not include the first area 910D or the second area 910E as described above, and have a second thickness thinner than the first thickness on the side that includes the first area 910D or the second area 910E.

According to various embodiments, the electronic device 900 may include at least one of a display 901 (e.g., a first display), an input device 903, audio output devices 907 and 914, sensor modules 904 and 919, camera modules 905, 912, and 913, a key input device 917, an indicator (not illustrated), or connectors 908 and 909. In some embodiments, the electronic device 900 may omit at least one (e.g., the key input device 917 or the indicator) of the components or may further include other components.

The display 901 may be exposed, for example, through a substantial portion of the front plate 902. In some embodiments, at least a portion of the display 901 may be exposed through the front plate 902 forming the first surface 910A and the first area 910D of the side surface 910C. For example, the display 901 may be coupled to or disposed adjacent to a touch detection circuit, a pressure sensor capable of measuring the intensity (pressure) of the touch, and/or a digitizer that detects a magnetic field-type stylus pen. In some embodiments, at least a portion of the sensor modules 904 and 919 and/or at least a portion of the key input device 917 may be disposed in the first area 910D and/or the second area 910E.

According to an embodiment, the input device 903 may include a microphone. In some embodiments, the input device 903 may include a plurality of microphones disposed to detect the direction of sound. The audio output devices 907 and 914 may include speakers. The audio output devices 907 and 914 may include an external speaker 907 and a call receiver 914. In some embodiments, the input device 903, the audio output devices 907 and 914, and the connectors 908 and 909 may be disposed in the space of the electronic device 900 and be exposed to the external environment through at least one hole formed in the housing 910. In some embodiments, the hole formed in the housing 910 may be shared by the input device 903 and the audio output devices 907 and 914. In some embodiments, the audio output devices 907 and 914 may include a speaker (e.g., a piezo speaker) configured to operate without requiring a hole formed in the housing 910.

According to an embodiment, the sensor modules 904 and 919 may generate an electrical signal or data value corresponding to an internal operating state of the electronic device 900 or an external environmental state. The sensor modules 904 and 919 may include, for example, a first sensor module 904 (e.g., a proximity sensor) and/or a second sensor module (not illustrated) (e.g., a fingerprint sensor) disposed on the first surface 910A of the housing 910, and/or a third sensor module 919 (e.g., an HRM sensor) disposed on the second surface 910B of the housing 910. The fingerprint sensor may be disposed on the first surface 910A of the housing 910. The fingerprint sensor (e.g., an ultrasonic or optical fingerprint sensor) may be disposed below the display 901 on the first surface 910A. The electronic device 900 may further include at least one unillustrated sensor module, such as a gesture sensor, a gyroscope sensor, a barometric pressure sensor, a magnetic sensor, an accelerometer, a grip sensor, a color sensor, an infrared (IR) sensor, a biosensor, a temperature sensor, a humidity sensor, or an illuminance sensor 904.

According to an embodiment, the electronic device 900 may include a first camera module 905 disposed on the first surface 910A, and/or a second camera module 912 disposed on the second surface 910B, and/or a flash 913. The camera modules 905 and 912 may include one or more lenses, image sensors, and/or an image signal processor. The flash 913 may include, for example, a light-emitting diode or a xenon lamp. In some embodiments, two or more lenses (e.g., wide-angle and telephoto lenses) and image sensors may be disposed on one surface of the electronic device 900.

According to an embodiment, the key input device 917 may be disposed on the side surface 910C of the housing 910. In another embodiment, the electronic device 900 may not include some or all of the key input devices 917, and the omitted key input devices 917 may be implemented in other forms, such as soft keys, on the display 901. In another embodiment, the key input device 917 may be implemented using a pressure sensor included in the display 901.

The indicator may be disposed, for example, on the first surface 910A of the housing 910. For example, the indicator may provide status information of the electronic device 900 in the form of light. In another embodiment, the light-emitting element may, for example, provide a light source associated with operation of the camera module 905. The indicator may include, for example, an LED, an IR LED, and/or a xenon lamp.

According to an embodiment, the connector holes 908 and 909 may include a first connector hole 908 capable of accommodating a connector (e.g., an USB connector or an IF module (interface connector port module)) for transmitting and receiving power and/or data to and from an external electronic device, and a second connector hole (or an earphone jack) 909 capable of accommodating a connector for transmitting and receiving audio signals to and from an external electronic device.

According to an embodiment, some camera modules 905 of the camera modules 905 and 912, some sensor modules 904 of the sensor modules 904 and 919, or the indicator may be disposed to be exposed through the display 901. For example, the camera module 905, the sensor module 904, or the indicator may be disposed in the internal space of the electronic device 900 so as to be exposed to the external environment through an opening formed through the front plate 902 of the display 901. In another embodiment, some sensor modules 904 may be disposed to perform their functions without being visually exposed through the front plate 902 in the internal space of the electronic device. For example, in this case, the perforated opening may not be necessary for the area of the display 901 facing the sensor module.

According to various embodiments, the electronic device 900 may include a conductive portion 9183 disposed between a pair of spaced-apart non-conductive portions 9181 and 9182 in the lateral member 918 and configured to operate as the antenna A1 via the wireless communication circuit (e.g., the wireless communication module 192 of FIG. 1). In an embodiment, the electronic device 630 may include a conductive pattern 3151 disposed on the rear surface of the front plate 902 or on the lateral member 918. In an embodiment, at least one point of the conductive pattern 3151 may be electrically connected to the conductive portion 9183, thereby helping improve the radiation performance of the antenna A1.

According to various embodiments, an electronic device (e.g., the electronic device 300 of FIG. 5A) may include a housing (e.g., the first housing 310 of FIG. 5A) including a first conductive portion (e.g., the first conductive portion 316 of FIG. 5A), a cover (e.g., the first protective cover 315 of FIG. 5A) coupled to the housing, a display (e.g., the first display 330 of FIG. 4A) disposed in the housing so as to be at least partially visible from the outside through the cover, at least one conductive pattern (e.g., the conductive pattern 3151 of FIG. 5A) disposed in the cover so as not to be visible from the outside of the electronic device and having at least one portion electrically connected to the first conductive portion, and a wireless communication circuit (e.g., the wireless communication circuit F1 of FIG. 5A) configured to transmit or receive a wireless signal through the first conductive portion and the at least one conductive pattern.

According to various embodiments, the at least one conductive pattern may be disposed to a length extending in a direction parallel to a length direction of the first conductive portion.

According to various embodiments, the at least one conductive pattern may be disposed to have a length equal to or shorter than that of the first conductive portion.

According to various embodiments, the cover may include a first portion (e.g., the first portion 315b of FIG. 5B) forming part of a side surface of the electronic device and a second portion (e.g., the second portion 315c of FIG. 5B) extending from the first portion and forming part of a front surface of the electronic device, and the at least one conductive pattern may be disposed at a position of the cover corresponding to the first portion and/or the second portion.

According to various embodiments, the at least one conductive pattern may be spaced apart from the display.

According to various embodiments, the housing may include a lateral member (e.g., the first lateral member 313 of FIG. 5A) forming at least a portion of the side surface of the electronic device, and the first conductive portion may be disposed through a first non-conductive portion (e.g., the first non-conductive portion 3161 of FIG. 5A) and a second non-conductive portion (e.g., the second non-conductive portion 3162 of FIG. 5A) spaced apart from the lateral member.

According to various embodiments, the wireless communication circuit may be fed through a first point (e.g., the first point L1 of FIG. 5A) of the first conductive portion between the first non-conductive portion and the second non-conductive portion, and the at least one conductive pattern may be electrically connected to the first conductive portion at a second point (e.g., the second point L2 of FIG. 5A) between the first point and the second non-conductive portion.

According to various embodiments, the at least one conductive pattern may be electrically connected to the ground (e.g., the ground G of FIG. 9E) of the electronic device.

According to various embodiments, the at least one conductive pattern may be additionally connected to the first conductive portion at a third point (e.g., the third point L3 of FIG. 5A) between the first non-conductive portion and the second point (e.g., the second point L2 of FIG. 5A).

According to various embodiments, the at least one conductive pattern may be additionally connected to the first conductive portion at a fourth point (e.g., the fourth point L4 of FIG. 9B) between the second point (e.g., the second point L2 of FIG. 9B) and the third point (e.g., the third point L3 of FIG. 9B).

According to various embodiments, the electronic device may further include a second conductive portion (e.g., the third conductive portion 318 of FIG. 9C) disposed through a third non-conductive portion (e.g., the third non-conductive portion 3163 of FIG. 9C) spaced apart from the second non-conductive portion, and the at least one conductive pattern may be additionally connected at a third point (e.g., the third point L3 of FIG. 9C) of the second conductive portion.

According to various embodiments, the first conductive portion may be electrically connected to the ground (e.g., the ground G of FIG. 7) of the electronic device between the first non-conductive portion and the first point (e.g., the first point L1 of FIG. 7).

According to various embodiments, the wireless communication circuit may be fed through a first point (e.g., the first point L1 of FIG. 9G) of the first conductive portion between the first non-conductive portion and the second non-conductive portion, and the at least one conductive pattern may include a first conductive pattern (e.g., the first conductive pattern 3151 of FIG. 9G) electrically connected to the first conductive portion at a second point (e.g., the second point L2 of FIG. 9G) between the first point and the second non-conductive portion (e.g., the second non-conductive portion 3162 of FIG. 9G), and a second conductive pattern (e.g., the second conductive pattern 3151-1 of FIG. 9G), spaced apart from the first conductive pattern and electrically connected to the first conductive portion at a third point (e.g., the third point L3 of FIG. 9G) between the first point and the second point.

According to various embodiments, the at least one conductive pattern (e.g., the conductive pattern 3151 of FIG. 9F) may be disposed to be coupled to the first conductive portion.

According to various embodiments, the cover may include a protective cover (e.g., the first protective cover 315 of FIG. 4B) configured to cover at least a portion of the edge of the display, and the at least one conductive pattern may be disposed on an inner surface (e.g., the inner surface 315a of FIG. 4B) of the protective cover.

According to various embodiments, the cover may include a window layer (e.g., the window layer 410 of FIG. 10), and the at least one conductive pattern may be disposed on an inner surface of the window layer.

According to various embodiments, the housing may include a first housing (e.g., the first housing 310 of FIG. 4A) and a second housing (e.g., the second housing 320 of FIG. 4A) rotatably connected to the first housing through a hinge module (e.g., the hinge module 340 of FIG. 4A), and the electronic device may include a flexible display (e.g., the first display 330 of FIG. 4A) bendably disposed to be supported by the first housing and the second housing.

According to various embodiments, the cover may include a first protective cover (e.g., the first protective cover 315 of FIG. 4A) disposed on the first housing with the flexible display interposed therebetween, such that an edge of the flexible display is not visible from the outside, and a second protective cover (e.g., the second protective cover 325 of FIG. 4A) disposed on the second housing with the flexible display interposed therebetween, such that the edge of the flexible display is not visible from the outside, and the at least one conductive pattern may be disposed on an inner surface of at least one of the first protective cover or the second protective cover.

According to various embodiments, the housing may include a first housing (e.g., the first housing 710 of FIG. 12A) and a second housing (e.g., the second housing 720 of FIG. 12A) slidably coupled to the first housing, and the electronic device may include a flexible display (e.g., the flexible display 730 of FIG. 12A) disposed to be at least partially supported by the second housing and disposed such that a display area thereof varies according to a retraction/extension operation of the second housing.

According to various embodiments, the flexible display may include a window layer (e.g., the window layer 410 of FIG. 12B) and a display panel (e.g., the display panel 430 of FIG. 12B) laminated on a rear surface of the window layer, and the at least one conductive pattern may be disposed on the inner surface of the window layer.

Embodiments of the disclosure disclosed in this specification and drawings only present specific examples to easily describe the technical contents according to the embodiments of the disclosure and to help understanding of the embodiments of the disclosure, and they are not intended to limit the scope of the embodiments of the disclosure. Therefore, in addition to the embodiments disclosed herein, all changes or modifications derived based on the technical idea of various embodiments of the disclosure should be interpreted as being included in the scope of various embodiments of the disclosure.

## Claims

1. An electronic device (300), comprising:
a housing (310) including a first conductive portion (316);
a cover (315) coupled to the housing;
a display (330) disposed in the housing so as to be at least partially visible from the outside through the cover;
at least one conductive pattern (3151) disposed in the cover so as not to be visible from the outside of the electronic device and having at least one portion electrically connected to the first conductive portion; and
a wireless communication circuit (F1) configured to transmit or receive a wireless signal through the first conductive portion and the at least one conductive pattern.

2. The electronic device of claim 1, wherein the at least one conductive pattern is disposed to have a length extending in a direction parallel to a length direction of the first conductive portion.

3. The electronic device of claim 1, wherein the at least one conductive pattern is disposed to have a length equal to or shorter than that of the first conductive portion.

4. The electronic device of claim 1, wherein the cover comprises a first portion (315b) forming part of a side surface of the electronic device, and a second portion (315c) extending from the first portion and forming part of a front surface of the electronic device, and
the at least one conductive pattern is disposed at a position corresponding to the first portion and/or the second portion of the cover.

5. The electronic device of claim 4, wherein the at least one conductive pattern is spaced apart from the display.

6. The electronic device of claim 1, wherein the housing comprises a lateral member (313) configured to form at least a portion of a side surface of the electronic device, and
the first conductive portion is disposed in the lateral member through a first non-conductive portion (3161) and a second non-conductive portion (3162) spaced apart from each other.

7. The electronic device of claim 6, wherein the wireless communication circuit is fed through a first point (L1) of the first conductive portion between the first non-conductive portion and the second non-conductive portion, and
the at least one conductive pattern is electrically connected to the first conductive portion at a second point (L2) between the first point and the second non-conductive portion.

8. The electronic device of claim 7, wherein the at least one conductive pattern is electrically connected to a ground (G) of the electronic device.

9. The electronic device of claim 7, wherein the at least one conductive pattern is additionally connected to the first conductive portion at a third point (L3) between the first non-conductive portion and the second point (L2).

10. The electronic device of claim 9, wherein the at least one conductive pattern is additionally connected to the first conductive portion at a fourth point (L4) between the second point (L2) and the third point (L3).

11. The electronic device of claim 7, further comprising a second conductive portion (318) disposed through a third non-conductive portion (3163) spaced apart from the second non-conductive portion,
wherein the at least one conductive pattern is additionally connected at a third point (L3) of the second conductive portion.

12. The electronic device of claim 7, wherein the first conductive portion is electrically connected to a ground (G1) of the electronic device between the first non-conductive portion and the first point (L1).

13. The electronic device of claim 6, wherein the wireless communication circuit is fed through a first point (L1) of the first conductive portion between the first non-conductive portion and the second non-conductive portion, and
the at least one conductive pattern comprises:
a first conductive pattern (3151) electrically connected to the first conductive portion at a second point (L2) between the first point (L1) and the second non-conductive portion (3162); and
a second conductive pattern (3151-1) spaced apart from the first conductive pattern and electrically connected to the first conductive portion at a third point (L3) between the first point (L1) and the second point (L2).

14. The electronic device of claim 1, wherein the at least one conductive pattern (3151) is disposed at a position to be coupled to the first conductive portion.

15. The electronic device of claim 1, wherein the cover comprises a protective cover (315) configured to cover at least a portion of an edge of the display, and
the at least one conductive pattern is disposed on an inner surface (315a) of the protective cover.
